# EUROPÄISCHE PATENTANMELDUNG

(11) **EP 2 554 558 A1**
(43) Veröffentlichungstag der Anmeldung: **06.02.2013**
(21) Anmeldenummer: 11290355.4
(22) Anmeldetag: 02.08.2011
(51) Int. Cl.: C08F 236/12, C08F 2/06, C08C 19/02

(54) **Verfahren zur Herstellung von Nitrilkautschuken in organischen Lösungsmitteln**

(71) Anmelder: Lanxess Deutschland GmbH, 51369 Leverkusen (DE); Karlsruher Institut Für Technologie (KIT), 76131 Karlsruhe (DE)
(72) Erfinder: Brandau, Sven, 67000 Strasbourg (FR); Kaiser, Andreas, 67000 Strasbourg (FR); Klimpel, Michael, 40764 Langenfeld (DE); Barner-Kowollik, Christopher, 76297 Stutensee-Blankenloch (DE); Dürr, Christoph J., 76137 Karlsruhe (DE); Emmerling, Sebastian G.J., 76774 Leimersheim (DE)

(57) **Zusammenfassung**

Bereitgestellt wird ein neues und verbessertes Verfahren zur Herstellung von Nitrilkautschuken durch radikalische Polymerisation in speziellen Lösungsmittelgemischen. Die erhaltenen Nitrilkautschuke können anschließend einer Hydrierung unterzogen werden. Das Verfahren zeichnet sich durch exzellente Zeit-Umsatz Kurven aus.

## Beschreibung

Die vorliegende Erfindung betrifft ein Verfahren zur Herstellung von Nitrilkautschuken durch radikalische Polymerisation, die in Lösung unter Kombination bestimmter Lösungsmitteln durchgeführt wird, ein Verfahren zur Hydrierung der dabei erhaltenen Nitrilkautschuke.

Unter Nitrilkautschuken, abgekürzt auch als "NBR" bezeichnet, werden Kautschuke verstanden, bei denen es sich um Co- oder Terpolymere aus mindestens einem α,β-ungesättigten Nitril, mindestens einem konjugierten Dien und gegebenenfalls einem oder mehreren weiteren copolymerisierbaren Monomeren handelt. Unter hydrierten Nitrilkautschuken ("HNBR") werden entsprechende Co- oder Terpolymere verstanden, bei denen die C=C-Doppelbindungen der einpolymerisierten Dien-Einheiten ganz oder teilweise hydriert sind.

Sowohl NBR als auch HNBR nehmen seit vielen Jahren einen festen Platz im Bereich der Spezialelastomere ein. Sie verfügen über ein ausgezeichnetes Eigenschaftsprofil in Form einer ausgezeichneten Ölbeständigkeit, einer guten Hitzebeständigkeit und einer hervorragenden Beständigkeit gegen Ozon und Chemikalien, wobei letztere im Fall des HNBR noch ausgeprägter als beim NBR ist. NBR und HNBR weisen ferner sehr gute mechanische sowie anwendungstechnische Eigenschaften auf. Aus diesem Grund finden sie breite Verwendung in den verschiedensten Anwendungsgebieten und werden beispielsweise eingesetzt zur Herstellung von Dichtungen, Schläuchen, Riemen und Dämpfungselementen im Automobilsektor, ferner für Statoren, Bohrlochdichtungen und Ventildichtungen im Bereich der Ölförderung sowie auch für zahlreiche Teile der Elektroindustrie, des Maschinen- und Schiffsbaus. Kommerziell erhältlich sind eine Vielzahl unterschiedlicher Typen, die sich je nach Anwendungsbereich durch unterschiedliche Monomere, Molekulargewichte, Polydispersitäten sowie mechanische und physikalische Eigenschaften auszeichnen. Neben den Standardtypen werden vor allem Spezialtypen, die sich durch Gehalte spezieller Termonomere oder besondere Funktionalisierungen auszeichnen, zunehmend nachgefragt.

Im praktischen Einsatz der (H)NBR Kautschuke kommt dabei auch der Vulkanisation der Kautschuke, d.h. insbesondere dem Vernetzersystem und den Vulkanisationsbedingungen, eine wachsende Bedeutung zu. So wurden neben den bereits seit vielen Jahrzehnten existierenden klassischen Kautschuk-Vernetzungssystemen auf Basis von Peroxiden bzw. Schwefel in den letzten Jahren diverse neue Konzepte zur alternativen Vernetzung entwickelt. Derartige Vernetzungskonzepte beziehen auch Polymere mit ein, die aufgrund funktioneller Gruppen nicht allen Vernetzungsformen und -agentien zugänglich sind und daher eine besondere Herausforderung darstellen.

Großtechnisch werden Nitrilkautschuke fast ausschließlich durch sogenannte Emulsionspolymerisation hergestellt. Zur Regelung des Molekulargewichts und damit auch der Viskosität des entstehenden Nitrilkautschuks werden dabei üblicherweise Dodecylmercaptane, insbesondere Tertiärdodecylmercaptane ("TDDM" oder auch "TDM" abgekürzt) eingesetzt. Nach der Polymerisation wird der erhaltene NBR-Latex in einem ersten Schritt koaguliert und daraus der NBR-Feststoff isoliert. Sofern eine weiterführende Hydrierung des Nitrilkautschuks zum HNBR gewünscht ist, erfolgt diese Hydrierung ebenfalls nach bekannten Methoden des Standes der Technik, beispielsweise unter Einsatz homogener oder auch heterogener Hydrierkatalysatoren. Die Katalysatoren basieren üblicherweise auf Rhodium, Ruthenium oder Titan. Es können aber auch Platin, Iridium, Palladium, Rhenium, Ruthenium, Osmium, Kobalt oder Kupfer entweder als Metall oder aber bevorzugt in Form von Metallverbindungen eingesetzt werden.

In großtechnischem Maßstab werden derartige Hydrierreaktionen von NBR zum HNBR üblicher Weise in homogener Phase, d.h. in einem organischen Lösungsmittel durchgeführt. Geeignete Katalysatoren und Lösungsmittel hierfür sind beispielsweise aus DE-A 25 39 132 und EP-A 0 471 250 bekannt. Insbesondere der sogenannte Wilkinson-Katalysator hat sich für eine selektive Hydrierung der Nitrilkautschuke in Monochlorbenzol als organischem Lösungsmittel bewährt. Um diese Hydrierung in einem organischem Medium durchzuführen, muss somit der nach der Polymerisation in wässriger Emulsion erhaltene Nitrilkautschuk zunächst isoliert werden. Dies ist verfahrenstechnisch und apparativ aufwändig und damit auch wirtschaftlich nicht uneingeschränkt attraktiv.

Hinzukommt, dass im Verlauf der Hydrierung von Nitrilkautschuken ein ganz erheblicher Anstieg der Viskosität (üblicherweise um einen Faktor von 2 oder mehr) zu beobachten ist (der sogenannte Mooney-Sprung, in der Literatur oft auch als Mooney Increase Ratio ("MIR") bezeichnet). Aus diesem Grund müssen Nitrilkautschuke unter Umständen vor der Hydrierung in einem weiteren Schritt einem Molekulargewichtsabbau (z.B. durch Metathese) unterzogen werden, um letztendlich einen hydrierten Nitrilkautschuk mit nicht zu hohem Molekulargewicht, respektive nicht zu hoher Viskosität erhalten zu können. Auf den bisher bekannten und großtechnisch umsetzbaren Synthesewegen sind auch den Möglichkeiten zur Beeinflussung der Polydispersität in gewissem Maß Grenzen gesetzt.

Es gab daher bereits verschiedenste Ansätze zur Optimierung der Herstellungsverfahren von NBR sowie HNBR. So wurde versucht, die Polymerisation zum Nitrilkautschuk in organischer Lösung durchzuführen. Diese Arbeiten waren jedoch bisher wenig Erfolg versprechend, und eine tatsächliche technische Umsetzung derartiger Verfahren ist bisher weder aus der Literatur noch aus der Praxis bekannt. In der Zusammenfassung der **Dissertation von C. Hollbeck**, Universität-Gesamthochschule Essen, 1995, Seite II, wird für die Copolymerisation von Acrylnitril und 1,3-Butadien in organischer Lösung folgendes festgestellt (Zitat): "Mit einem Zahlenmittel des Polymerisationsgrades Pn von 1589 (Molekulargewicht (Mn)= ~85.800 g/mol) und einem Umsatz von 40,5% konnten die gesteckten Ziele bei einer Reaktionstemperatur von 343 K in 40 Stunden realisiert werden. Eine Zeitverkürzung auf 18 Stunden ließ sich nur unter Reduzierung des geforderten Umsatzes erreichen. Wie Testversuche zeigten, ist unter den gegebenen Bedingungen auch bei einer Erhöhung der Temperatur auf 353 K eine Kombination von Pn ≥ 1400 und Umsatz größer als 40% nicht im Bereich des Möglichen". Eine Beschränkung des erreichbaren Umsatzes auf gut 40 % innerhalb einer Reaktionszeit von 40 Stunden machen das dort beschriebene Verfahren der organischen Lösungspolymerisation für die Praxis technisch und wirtschaftlich untauglich.

Zur Synthese verschiedener Polymere wurde im Stand der Technik bereits die sogenannte RAFT-Technologie eingesetzt **(**WO-A-01/60792**,** US 7,230,063 B1**,** WO-A-2007/003782**,** US-A-2008/0153982**,** WO-A-2005/061555**)**.

In WO-A-98/01478 wird die Herstellung verschiedenster Homo- und Copolymere beschrieben. Als Homopolymere werden z.B. Poly(meth)acrylate, Poly(meth)acrylsäure, Polyacrylamide und Polystyrol synthetisiert. Als Blockcopolymere werden z.B. Poly(methylacrylat-block-ethylacrylat), Poly(n-butylacrylat-block-acrylsäure), Poly(4-methylstyrol-block-styrol), Poly(styrol-block-acrylamid), Poly(methylmethacrylat-block-styrol), Poly(acrylnitril-co-styrol) (Beispiel 67), Poly(styrol-co-butadien) (Beispiel 69) und andere hergestellt. Die Möglichkeit einer Copolymerisation eines konjugierten Diens, insbesondere 1,3-Butadien, mit einem α,β-ungesättigten Nitril, insbesondere Acrylnitril, wird jedoch in WO-A-98/01478 weder beschrieben oder nahegelegt.

Bekannt ist es bereits, reines Polyacrylnitril (PAN) durch RAFT Technologie herzustellen. Aus Macromolecules 2003, 36, 8537 sind erste Versuche bekannt, bei denen Polyacrylnitril mit nur geringen Molmassen von bis zu 16.000 gm/mol und engen Molekulargewichtsverteilungen nahe 1,1 erhalten wurde. Seitdem wurden weitere Arbeiten durchgeführt, wodurch es gelang Polyacrylnitril durch RAFT Polymerisation mit vernünftigen Ergebnissen herzustellen. Dieses Verfahren wird unter anderem in European Polymer Journal (2008), 44(4), 1200-1208 (Xiao-hui Liu, Gui-bao Zhang, Bai-xiang Li, Yun-gang Bai, Ding Pan und Yue-sheng Li) beschrieben. Hier konnte mittels RAFT-Technologie Polyacrylnitril mit hohem Molekulargewicht (Mn >200.000 g/mol) und einem geringen Polydispersitätsindex (PDI ~ 1,7) in Lösung unter Einsatz von Bis(thiobenzoyl)disulfid oder Bis(thiophenylacetoyl)disulfid, als Vorstufen für die in-situ erzeugten Regler 2-Cyanoprop-2-yldithiobenzoat und 2-Cyanoprop-2-yl-dithiophenylacetat, erhalten werden. Wie in Journal of Polymer Science, Part A: Polymer Chemistry (2005), 44(1), 490-498 beschrieben, führt die Verwendung von Dibenzyltrithiocarbonaten als RAFT-Regler für die Homopolymerisation von Acrylnitril dagegen nur zu Polymeren mit geringen Molekularmassen (Mₙ) von < 30.000 g/mol, selbst wenn die Polydispersitäten zwischen 1,02 und 2,35 liegen. Aus Macromolecular Chemistry and Physics (2002), 203(3), 522-537 ist es ferner bekannt, dass die Homopolymerisation von 1,3-Butadien durch RAFT-Technologie nur Polymere mit geringen Molekulargewichten liefert: Die erzielten Molekulargewichte (Mₙ) liegen noch niedriger als bei der o.g. Herstellung von Polyacrylnitril mit Dibenzyltrithiocarbonaten als RAFT-Regler und betragen maximal 10.500 g/mol bei einer gleichzeitig hohen Polydispersität von 3,40. Es können hier zwar auch deutlich niedrigere Polydispersitäten von bis zu 1,24 erhalten werden, dies jedoch nur unter substanzieller Einbuße beim Molekulargewicht (Mₙ) auf nur noch 1.300 g/mol.

In der WO-A-2011/032832 wurde erstmals ein Verfahren zur Herstellung von Nitrilkautschuken durch Polymerisation in organischer Lösung beschrieben. Dieses Verfahren wird in Gegenwart spezieller sogenannter RAFT Regler durchgeführt. In noch nicht offengelegten Anmeldungen ist ferner die Herstellung von Nitrilkautschuken in organischer Lösung in Abwesenheit jeglicher Regler bzw. in Anwesenheit spezieller Regler, wie z.B. Mercaptanen, Mercaptoalkoholen, Mercaptocarbonsäuren, Thiocarbonsäuren, Disulfiden, Polysulfiden, Thioharnstoff und anderen beschrieben. Dass der Einsatz sogenannter RAFT-Regler bei der NBR Polymerisation zum Erfolg führen würde, war unerwartet, insbesondere vor dem Hintergrund der oben beschriebenen Untersuchungen zur Herstellung von Polybutadien **(**Macromolecular Chemistry and Physics (2002), 203(3), 522-537**)**, welche lediglich Molekulargewichte in technisch uninteressanten Größenordnungen ergeben (technisch verwertbare Polymere auf Butadien-Basis erfordern im Allgemeinen ein Molekulargewicht Mn > 50.000 g/mol, gleiches gilt für statistische Copolymere auf Basis Acrylnitril und Butadien). Das in der WO-A-2011/032832 beschriebene Verfahren ist jedoch im Hinblick auf das Zeit-Umsatz Verhalten der Polymerisation zum Nitrilkautschuk noch nicht optimal.

Vor dem oben geschilderten Hintergrund bestand die **Aufgabe der vorliegenden Erfindung** somit darin, ein verbessertes Verfahren zur Herstellung von Nitrilkautschuken in organischer Lösung bereitzustellen.

**Überraschenderweise** wurde gefunden, dass unter Verwendung bestimmter Lösemittelgemische in bestimmten Mengenverhältnissen bei der Herstellung eines Nitrilkautschukes eine Steigerung des Monomerumsatzes mit der Zeit gegenüber einem reinen Lösemitteln erzielt werden kann Im Sinne dieser Anmeldung ist der Begriff "Nitrilkautschuk(e)" breit zu interpretieren und umfasst sowohl die Nitrilkautschuke als auch hydrierte Nitrilkautschuke. Sofern es sich um hydrierte Nitrilkautschuke handelt, bedeutet die oben genannte Formulierung "Nitrilkautschuke enthaltend Wiederholungseinheiten abgeleitet von" somit, dass es sich bei den Wiederholungseinheiten, die auf das konjugierte Dien zurückgehen, um solche handelt, in denen die nach der Polymerisation im Polymer zunächst vorhandenen C=C Doppelbindungen ganz oder teilweise hydriert sind.

Soweit in dieser Anmeldung der Begriff "substituiert" verwendet wird, so bedeutet dies, dass ein Wasserstoff-Atom an einem angegebenen Rest oder Atom durch eine der angegebenen Gruppen ersetzt ist, mit der Maßgabe, dass die Wertigkeit des angegebenen Atoms nicht überschritten wird und immer nur unter der Bedingung, dass diese Substitution zu einer stabilen Verbindung führt.

**Gegenstand der Erfindung** ist somit ein **Verfahren zur Herstellung von Nitrilkautschuken** durch radikalische Polymerisation mindestens eines konjugierten Diens, mindestens eines α,β-ungesättigten Nitrils und gegebenenfalls eines oder mehrerer weiterer copolymerisierbarer Monomere, welches dadurch gekennzeichnet ist, dass mindestens zwei Lösungsmittel eingesetzt werden, wobei ein Lösungsmittel in einer Menge im Bereich von 70 bis 99,9 Vol%, bezogen auf die Summe aller verwendeten Lösungsmittel eingesetzt wird.

Das erfindungsgemäße Verfahren kann in verschiedenen Ausführungsformen durchgeführt werden,
(1) in Abwesenheit jeglicher Molekulargewichtsregler,
(2) in Anwesenheit einer Verbindung der allgemeinen Strukturformel (VI) 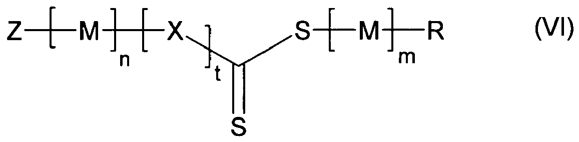 worin
   - **Z**: für H, einen linearen oder verzweigten, gesättigten, ein- oder mehrfach ungesättigten Alkylrest, einen gesättigten, ein- oder mehrfach ungesättigten Carbo- oder Heterocyclylrest, Aryl, Heteroaryl, Arylalkyl, Heteroarylalkyl, Alkoxy, Aryloxy, Heteroaryloxy, Amino, Amido, Hydroxyimino, Carbamoyl, Alkoxycarbonyl, F, Cl, Br, I, Hydroxy, Phosphonato, Phosphinato, Alkylthio, Arylthio, Sulfanyl, Thiocarboxy, Sulfinyl, Sulfono, Sulfino, Sulfeno, Sulfonsäuren, Sulfamoyl, Silyl, Silyloxy, Nitril, Carbonyl, Carboxy, Oxycarbonyl, Oxysulfonyl, Oxo, Thioxo, Borate, Selenate, Epoxy, Cyanate, Thiocyanate, Isocyanate, Thioisocyanate und Isocyanide,
   - **R**: (**a)** für den Fall, dass m ≠ 0 ist, die gleichen Bedeutungen besitzt wie der Rest Z und
   **(b)** für den Fall, dass m = 0 ist, für H, einen linearen oder verzweigten, gesättigten, ein-oder mehrfach ungesättigten Alkylrest, einen gesättigten, ein- oder mehrfach ungesättigten Carbo- oder Heterocyclylrest, Aryl, Heteroaryl, Arylalkyl, Heteroarylalkyl, Alkoxy, Aryloxy, Heteroaryloxy, Amino, Amido, Carbamoyl, Alkoxy, Aryloxy, Alkylthio, Arylthio, Sulfanyl, Thiocarboxy, Sulfmyl, Sulfono, Sulfino, Sulfeno, Sulfonsäuren, Sulfamoyl, Carbonyl, Carboxy, Oxycarbonyl, Oxysulfonyl, Oxo, Thioxo, Epoxy, Cyanate, Thiocyanate, Isocyanate, Thioisocyanate oder Isocyanide steht,
   - **M**: für Wiederholungseinheiten eines oder mehrerer, ein- oder mehrfach ungesättigter Monomeren steht, umfassend konjugierte oder nicht-konjugierte Diene, Alkine und Vinylverbindungen, oder für ein Strukturelement, welches sich ableitet Polymeren umfassend Polyether, insbesondere Polyalkylenglykolether und Polyalkylenoxide, Polysiloxane, Polyole, Polycarbonate, Polyurethane, Polyisocyanate, Polysaccharide, Polyester und Polyamide,
   - **n und m**: gleich oder verschieden sind und jeweils im Bereich von 0 bis 10.000 liegen,
   - **t**: 0 oder 1 ist, sofern n= 0, und gleich 1 ist, sofern n ≠ 0, und
   - **X**: für C(Z₂), N(Z), P(Z), P(=O)(Z), O, S, S(=O) oder S(=O)₂ steht, wobei Z in diesen Resten die gleiche Bedeutungen besitzen kann, wie zuvor für die Formel (VI) ausgeführt,
   oder
(3) in Anwesenheit einer Verbindung ausgewählt aus der Gruppe bestehend aus
   (i) Mercaptanen, die mindestens eine SH-Gruppe enthalten,
   (ii) Mercaptoalkoholen, die mindestens eine SH-Gruppe und mindestens eine OH-Gruppe enthalten,
   (iii) Mercaptocarbonsäuren, die mindestens eine SH-Gruppe und mindestens eine Carboxylgruppe enthalten, und Mercaptocarbonsäureester, die mindestens eine SH-Gruppe und mindestens eine Carbonsäureestergruppe enthalten,
   (iv) Thiocarbonsäuren,
   (v) Disulfiden, Polysulfiden,
   (vi) Thioharnstoff,
   (vii) Allylverbindungen,
   (viii) Aldehyden,
   (ix) aliphatischen Halogenkohlenwasserstoffen, araliphatischen Halogenkohlenwasserstoffen und
   (x) Saccharin sowie
   (xi) beliebigen Mischungen von zwei oder mehr der vorgenannten Molekulargewichtsregler (i)-(x).

Mit dem erfindungsgemäßen Verfahren gelingt es durch die Verwendung von mindestens zwei Lösungsmitteln, bei gleichen Reaktionszeiten eine signifikante Umsatzsteigerung gegenüber dem Einsatz nur eines Lösungsmittel zu erreichen. Dies bedeutet entsprechend, dass man ähnliche Umsätze wie beim Einsatz nur eines Lösungsmittels nun in einer geringeren Reaktionszeit erzielen kann. Der Einsatz eines Lösungsmittelgemischs hat keinen negativen Einfluss auf die erhaltenen Molekulargewichte. Es gelingt somit technisch akzeptable Molekulargewichte (Mn > 50.000 g/mol) zu erreichen, mit - im Vergleich zu herkömmlichem Emulsions-NBR - sehr niedrigen Polydispersitäten von deutlich kleiner 2.0.
Optional schließt sich an die radikalische Polymerisation des erfindungsgemäßen Verfahrens eine Hydrierung des Nitrilkautschuks zu ganz oder teilweise hydriertem Nitrilkautschuk an.

### Detaillierte Beschreibung

### Ausführungsform (2) des erfindungsgemäßen Verfahrens:

In der Ausführungsvariante (2) des erfindungsgemäßen Verfahrens wird in Schritt (a) mindestens ein Regler der zuvor genannten allgemeinen Formel (VI) eingesetzt.

Die in den Resten Z und R der allgemeinen Formel (VI) genannten Bedeutungen können jeweils ein-oder mehrfach substituiert sein. Bevorzugt weisen die folgenden Reste eine ein- oder mehrfache Substitution auf: Alkyl, Carbocyclyl, Heterocyclyl, Aryl, Heteroaryl, Arylalkyl, Heteroarylalkyl, Alkoxy, Aryloxy, Alkylthio, Arylthio, Amino, Amido, Carbamoyl, Phosphonato, Phosphinato, Sulfanyl, Thiocarboxy, Sulfinyl, Sulfono, Sulfino, Sulfeno, Sulfamoyl, Silyl, Silyloxy, Carbonyl, Carboxy, Oxycarbonyl, Oxysulfonyl, Oxo, Thioxo, Borate, Selenate und Epoxy.

Als Substituenten kommen wiederum - soweit sich chemisch stabile Verbindungen ergeben - alle Bedeutungen in Frage, die Z annehmen kann. Besonders geeignet als Substituenten sind Halogen, bevorzugt Fluor, Chlor, Brom oder Iod, Nitril (CN) und Carboxy.

Die für Z und R in der allgemeinen Formel (VI) genannten Bedeutungen schließen explizit auch Salze der genannten Reste ein, soweit diese chemisch möglich und stabil sind. Hierbei kann es sich beispielsweise um Ammonium-Salze, Alkali-Salze, Erdalkali-Salze, Aluminium-Salze oder um protonierte Formen der Regler der allgemeinen Formel (VI) handeln.

Die für Z und R in der allgemeinen Formel (VI) genannten Bedeutungen schließen auch organometallische Reste ein, beispielsweise solche, die dem Regler eine Grignard Funktion verleihen. Z und R können ferner ein Carbanion darstellen bzw. aufweisen mit Lithium, Zink, Zinn, Aluminium, Blei und Bor als Gegenion.

Es ist ferner möglich, dass der Regler über den Rest R über einen Linker an eine Festphase oder Trägersubstanz angekoppelt ist. Bei dem Linker kann es sich um dem Fachmann bekannten Wang-, Sasrin-, Rink-Säure-, 2-Chlortrityl-, Mannich-, Safety-Catch-, Traceless- oder photolabile Linker handeln. Als Festphasen oder Trägersubstanzen kommen beispielsweise Silica, Ionenaustauscherharze, Tone (Clay), Montmorillonite, vernetztes Polystyrol, Polyethylenglykol gepfropft auf Polystyrol, Polyacrylamide ("Pepsyn"), Polyethylenglykol-Acrylamid-Copolymere (PEGA), Cellulose, Baumwolle und gekörntes poröses Glas (CPG, controlled pore glass) in Frage.

Es ist ferner möglich, dass die Regler der allgemeinen Formel (VI) als Liganden für metallorganische Komplexverbindungen fungieren, z.B. für solche auf Basis der Zentralmetalle Rhodium, Ruthenium, Titan, Platin, Iridium, Palladium, Rhenium, Ruthenium, Osmium, Kobalt, Eisen oder Kupfer.

Die in der oben genannten allgemeinen Formel (VI) für den Rest "M" aufgeführten Bedeutungen können ein- oder mehrfach substituiert sein. Somit kann es sich bei **M** um Wiederholungseinheiten eines oder mehrerer, einfach oder mehrfach ungesättigter Monomere handeln, bevorzugt um optional ein- oder mehrfach substituierte konjugierte oder nicht-konjugierte Diene, optional ein- oder mehrfach substituierte Alkine oder optional ein- oder mehrfach substituierte Vinylverbindungen, beispielsweise fluorierte ein- oder mehrfach ungesättigte Vinylverbindungen, oder aber um ein divalentes Strukturelement, welches sich ableitet von substituierten oder unsubstituierten Polymeren umfassend Polyether, insbesondere Polyalkylenglykolether und Polyalkylenoxide, Polysiloxane, Polyole, Polycarbonate, Polyurethane, Polyisocyanate, Polysaccharide, Polyester und Polyamide. Hinter diesen Resten "M" kann sich somit ein monomerer oder polymerer Rest verbergen.

**Bevorzugt** wird ein Regler der allgemeinen Formel (VI) eingesetzt, bei dem
- Z und R: die zuvor für die allgemeine Formel (VI) genannten Bedeutungen besitzen und
- n, m und t: alle gleich Null sind.

Dieser bevorzugte **Regler** besitzt somit die **allgemeine Struktur (VIa):** 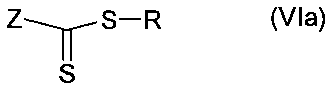 bei dem die Reste Z und R alle zuvor für die allgemeine Formel (VI) genannten Bedeutungen aufweisen können.

### Trithiocarbonate:

Als weiterer bevorzugter Regler kann ein Regler der **allgemeinen Formel (VIb)** eingesetzt werden, 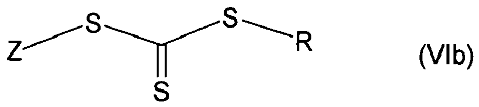 bei dem
- Z: die zuvor für die allgemeine Formel (VI) genannten Bedeutungen besitzt,
- R: die zuvor für die allgemeine Formel (VI) für die Variante b) mit m=0 genannten Bedeutungen besitzt, allerdings mit der Einschränkung, dass R nach homolytischer Spaltung der S-R Bindung entweder ein sekundäres, tertiäres oder aromatisch stabilisiertes Radikal ausbildet.

Dieser besonders bevorzugte Regler der allgemeinen Formel (VIb) ergibt sich aus dem Regler der allgemeinen Formel (VI), indem
n und m jeweils = 0 sind,
- t: gleich 1 ist,
- X: für Schwefel steht,
- Z: die zuvor für die allgemeine Formel (VI) genannten Bedeutungen besitzt und
- R: die zuvor für die allgemeine Formel (VI) für die Variante b) mit m=0 genannten Bedeutungen besitzt, allerdings mit der Einschränkung, dass R nach homolytischer Spaltung der S-R Bindung entweder ein sekundäres, tertiäres oder aromatisch stabilisiertes Radikal ausbildet.

Bei diesen besonders bevorzugten Reglern der allgemeinen Formel (VIb) handelt es sich somit in Abhängigkeit davon, ob Z und R im Rahmen der vorgegebenen Bedeutungen identisch sind oder nicht, um symmetrische oder asymmetrische Trithiocarbonate.

Besonders bevorzugt wird ein Regler der allgemeinen Formel (VIb) eingesetzt, bei dem
- Z: die zuvor für die allgemeine Formel (VI) genannten Bedeutungen besitzt und
- R: mit der Maßgabe, dass R nach homolytischer Spaltung der S-R Bindung entweder ein sekundäres, tertiäres oder aromatisch stabilisiertes Radikal ausbildet,
- für einen linearen oder verzeigten, gesättigten oder ein- oder mehrfach ungesättigten, optional ein- oder mehrfach substituierten Alkylrest steht, bevorzugt für einen entsprechenden C₃-C₂₀-Alkylrest, insbesondere für sec.-Butyl, tert.-Butyl, iso-Propyl, 1- Buten-3-yl, 2-Chloro-1-buten-2-yl, Propionsaeure-2-yl, Propionitril-2-yl, 2-Methylpropannitril-2-yl, 2-Methylpropionsaeure-2-yl oder 1H,1H,2-Keto-3-oxo-4H,4H,5H,5H-perfluorundecanyl, oder
- für einen gesättigten oder ein- oder mehrfach ungesättigten, optional ein- oder mehrfach substituierten Carbo- oder Heterocyclylrest steht, inbesondere für Cyclohexyl, Cumyl oder Cyclohexan-1-nitril-1-yl,
- für einen (Hetero)Arylrest steht, ganz besonders bevorzugt für einen C₆-C₂₄-(Hetero)arylrest, inbesondere für Phenyl, Pyridinyl oder Anthracenyl,
- für einen (Hetero)Aralkylrest steht, ganz besonders bevorzugt für Benzyl, Phenylethyl oder 1-Methyl-1-phenyleth-2-yl, oder
- für Thiocarboxy, Carbonyl, Carboxy, Oxo, Thioxo, Epoxy, sowie Salze der zuvor genannten Verbindungen steht.

Insbesondere bevorzugt wird ferner ein Regler der allgemeinen Formel (VIb) eingesetzt, bei dem
- Z: die zuvor für die allgemeine Formel (VI) genannten Bedeutungen besitzt, allerdings ebenfalls mit der zusätzlichen Einschränkung auf solche Bedeutungen, dass Z nach homolytischer Spaltung der Z-S Bindung entweder ein sekundäres, tertiäres oder aromatisch stabilisiertes Radikal ausbildet.

Hierbei handelt es sich dann um einen Trithiocarbonat-Regler, bei dem beide Reste R und Z polymerisationsinitiierend wirken.

Ganz besonders bevorzugt wird ferner ein Regler der allgemeinen Formel (VIb) eingesetzt, bei dem R und Z gleich oder verschieden sind und mit der Maßgabe, dass R und Z nach homolytischer Spaltung der R-S bzw. Z-S Bindung jeweils ein sekundäres, tertiäres oder aromatisch stabilisiertes Radikal ausbilden,
- für einen linearen oder verzeigten, gesättigten oder ein- oder mehrfach ungesättigten, optional ein- oder mehrfach substituierten Alkylrest steht, bevorzugt für einen entsprechenden C₃-C₂₀-Alkylrest, insbesondere für sec.-Butyl, tert.-Butyl, iso-Propyl, 1-Buten-3-yl, 2-Chloro-1-buten-2-yl, Propionsaeure-2-yl, Propionitril-2-yl, 2-Methylpropannitril-2-yl, 2-Methylpropionsaeure-2-yl oder 1H,1H,2-Keto-3-oxo-4H,4H,5H,5H-perfluorundecanyl, oder
- für einen gesättigten oder ein- oder mehrfach ungesättigten, optional ein- oder mehrfach substituierten Carbo- oder Heterocyclylrest steht, inbesondere für Cyclohexyl, Cumyl oder Cyclohexan-1-nitril-1-yl,
- für einen (Hetero)Arylrest steht, ganz besonders bevorzugt für einen C₆-C₂₄-(Hetero)arylrest, inbesondere für Phenyl, Pyridinyl oder Anthracenyl,
- für einen (Hetero)Aralkylrest steht, ganz besonders bevorzugt für Benzyl, Phenylethyl oder 1-Methyl-1-phenyleth-2-yl, oder
- für Thiocarboxy, Carbonyl, Carboxy, Oxo, Thioxo, Epoxy, sowie Salze der zuvor genannten Verbindungen stehen.

Bezüglich der für die allgemeine Formel (VIb) und nachfolgend für die allgemeinen Formeln (VIc), (VId) und (VIe) verwendeten Formulierungen, "dass R nach homolytischer Spaltung der R-S-Bindung ein **sekundäres oder tertiäres Radikal** bildet", gelten die nachfolgenden Definitionen. Diese gelten ebenfalls in analoger Form für die entsprechenden Formulierung "dass Z nach homolytischer Spaltung der Z-S-Bindung ein **sekundäres oder tertiäres Radikal** bildet", soweit diese im Rahmen der Anmeldung im Zusammenhang mit Z verwendet wird.

Das Atom im Rest R, welches die Bindung an S in der allgemeinen Formel (VIb) bewirkt (bzw. den noch folgenden allgemeinen Formeln (VIc), (VId) und (VIe)), führt bei homolytischer Spaltung der R-S Bindung dann zu einem als "tertiär" zu bezeichnenden Radikal, wenn an dieses Atom (die Bindung zum Schwefel ausgenommen) mindestens
(i) über Einfachbindungen drei Substituenten oder
(ii) über eine Einfachbindung ein Substituent und über eine Doppelbindung ein weiterer Substituent gebunden sind oder
(iii) über eine Dreifachbindung ein Substituent gebunden ist,
wobei alle vorgenannten Substituenten ungleich Wasserstoff sein müssen.

Das Atom im Rest R, welches die Bindung an S in den allgemeinen Formeln (VIb), (VIc), (VId) und (VIe) bewirkt, führt bei homolytischer Spaltung der R-S Bindung dann zu einem als "sekundär" zu bezeichnenden Radikal, wenn an dieses Atom
(i) über Einfachbindungen zwei Substituenten gebunden sind oder
(ii) über eine Doppelbindung ein Substituent gebunden ist,
wobei alle vorgenannten Substituenten ungleich Wasserstoff sein müssen und alle weiteren möglichen Substituenten H sind.

Beispiele für Reste R bzw. Z, die bei homolytischer Spaltung der R-S (bzw. Z-S) Bindung zu einem als "tertiär" zu bezeichnenden Radikal führen, sind z.B. tert. Butyl, Cyclohexan-1-nitril-1-yl und 2-Methylpropannitril-2-yl.

Beispiele für Reste R bzw. Z, die bei homolytischer Spaltung der R-S (bzw. Z-S) Bindung zu einem als "sekundär" zu bezeichnenden Radikal führen, sind z.B. sek-Butyl, iso-Propyl und Cycloalkyl, bevorzugt Cyclohexyl.

Bezüglich der nachfolgend für die Formel (VId) verwendeten Maßgabe, "dass Z nach homolytischer Spaltung der Z-S-Bindung ein **primäres Radikal** bildet", gilt folgende Definition: Das Atom im Rest Z, welches die Bindung an S in der allgemeinen Formel (VId) bewirkt, führt bei homolytischer Spaltung der Z-S Bindung dann zu einem als "primär" zu bezeichnenden Radikal, wenn an dieses Atom über eine Einfachbindung kein oder maximal ein Substituent gebunden ist, der nicht Wasserstoff ist. Für Z = H gilt die og. Maßgabe per Definition als erfüllt.

Beispiele für Reste Z, die bei homolytischer Spaltung der Z-S Bindung zu einem als "primär" zu bezeichnenden Radikal führen, sind somit z.B. H, geradkettige C₁-C₂₀ Alkylreste, OH, SH, SR und C₂-C₂₀ Alkylreste mit Verzweigungen jenseits des C-Atoms, das die Bindung an S bewirkt.

### Dithioester:

Als **weiterer bevorzugter Regler** kann ein Regler der **allgemeinen Formel** (**VIc**) eingesetzt werden, 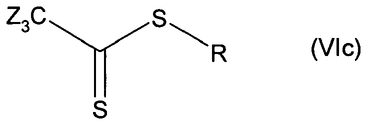
- Z: die zuvor für die allgemeine Formel (VI) genannten Bedeutungen besitzt,
- R: die zuvor für die allgemeine Formel (VI) für die Variante b) mit m=0 genannten Bedeutungen besitzt, allerdings mit der Einschränkung, dass R nach homolytischer Spaltung der S-R Bindung entweder ein sekundäres, tertiäres oder aromatisch stabilisiertes Radikal ausbildet.

Dieser besonders bevorzugte Regler der allgemeinen Formel (VIc) ergibt sich aus dem Regler der allgemeinen Formel (VI), wobei
n und m jeweils = 0 sind,
- t: gleich 1 ist,
- X: für C(Z)₂ steht,
- Z: die zuvor für die allgemeine Formel (VI) genannten Bedeutungen besitzt und
- R: die zuvor für die allgemeine Formel (VI) für die Variante b) mit m=0 genannten Bedeutungen besitzt, allerdings mit der Einschränkung, dass R nach homolytischer Spaltung der S-R Bindung entweder ein sekundäres, tertiäres oder aromatisch stabilisiertes Radikal ausbildet.

Besonders bevorzugt wird ein Regler der allgemeinen Formel (VIc) eingesetzt, bei dem
- R: mit der Maßgabe, dass R nach homolytischer Spaltung der S-R Bindung entweder ein sekundäres, tertiäres oder aromatisch stabilisiertes Radikal ausbildet,
- für einen linearen oder verzeigten, gesättigten oder ein- oder mehrfach ungesättigten, optional ein- oder mehrfach substituierten Alkylrest steht, bevorzugt einen entsprechenden C₃-C₂₀-Alkylrest, insbesondere für sec.-Butyl, tert.-Butyl, iso-Propyl, 1-Buten-3-yl, 2-Chloro-1-buten-2-yl, Propionsaeure-2-yl, Propionitril-2-yl, 2-Methylpropannitril-2-yl, 2-Methylpropionsaeure-2-yl oder 1H,1H,2-Keto-3-oxo-4H,4H,5H,5H-perfluorundecanyl, oder
- für einen gesättigten oder ungesättigten, optional ein- oder mehrfach substituierten Carbo-oder Heterocyclylrest steht, inbesondere für Cyclohexyl, Cumyl oder Cyclohexan-1-nitril-1-yl,
- für einen (Hetero)Arylrest steht, ganz besonders bevorzugt für einen C₆-C₂₄-(Hetero)Arylrest, inbesondere Phenyl, Pyridinyl oder Anthracenyl,
- für einen (Hetero)Arylalkylrest steht, ganz besonders bevorzugt für einen C₇-C₂₅-(Hetero)Arylalkylrest, insbesondere für Benzyl, Phenylethyl oder 1-Methyl-1-phenyleth-2-yl, oder
- für Thiocarboxy, Carbonyl, Carboxy, Oxo, Thioxo, Epoxy, sowie Salze der genannten Verbindungen steht.

### Asymmetrische Trithiocarbonate:

In einer weiteren bevorzugten Ausführungsform wird mindestens ein **Regler der allgemeinen Formel (VId)** eingesetzt, 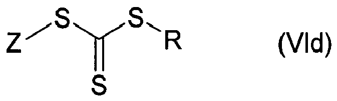 worin
- Z: die zuvor für die allgemeine Formel (VI) genannten Bedeutungen besitzt, allerdings mit der Einschränkung, dass Z nach homolytischer Spaltung der S-Z Bindung ein **primäres Radikal** ausbildet, und
- R: die gleichen Bedeutungen wie Z in der allgemeinen Formel (VI) besitzen kann, allerdings mit der Einschränkung, dass R nach homolytischer Spaltung der S-R Bindung entweder ein sekundäres, tertiäres oder aromatisch stabilisiertes Radikal ausbildet, und
mit der zusätzlichen Maßgabe, dass Z und R verschiedene Bedeutungen annehmen.

Dieser bevorzugte Regler der allgemeinen Formel (VId) ergibt sich aus dem Regler der allgemeinen Formel (VI) wobei
- n und m: jeweils = 0 sind,
- t: gleich 1 ist,
- X: für Schwefel steht,
- Z: die zuvor für die allgemeine Formel (VI) genannten Bedeutungen besitzt, allerdings mit der Einschränkung, dass Z nach homolytischer Spaltung der S-Z Bindung ein **primäres Radikal** ausbildet, und
- R: die gleichen Bedeutungen wie Z in der allgemeinen Formel (VI) besitzen kann, allerdings mit der Einschränkung, dass R nach homolytischer Spaltung der S-R Bindung entweder ein sekundäres, tertiäres oder aromatisch stabilisiertes Radikal ausbildet.

Bei diesen besonders bevorzugten Reglern der allgemeinen Formel (VId) handelt es sich somit um asymmetrische Trithiocarbonate.

Besonders bevorzugt wird ein Regler der oben genannten allgemeinen Formel (VId), worin
- **Z**: mit der Maßgabe, dass Z nach homolytischer Spaltung der S-Z Bindung ein primäres Radikal bildet, H, einen linearen oder verzeigten, gesättigten oder ein- oder mehrfach ungesättigten, optional ein- oder mehrfach substituierten Alkylrest, ganz besonders bevorzugt einen entsprechenden C₁-C₁₆ Alkylrest, insbesondere Methyl, Ethyl, n-Prop-1-yl, But-2-en-1-yl, n-Pent-1-yl, n-Hex-1-yl oder n-Dodecan-1-yl, Aralkyl, ganz besonders bevorzugt C₇-C₂₅-Aralkyl, insbesondere Benzyl, Amino, Amido, Carbamoyl, Hydroxyimino, Alkoxy, Aryloxy, F, Cl, Br, I, Hydroxy, Alkylthio, Arylthio, Carbonyl, Carboxy, Oxo, Thioxo, Cyanate, Thiocyanate, Isocyanate, Thioisocyanate, Isocyanide oder Salze der genannten Verbindungen bedeutet und
- **R**: mit der Maßgabe, dass R nach homolytischer Spaltung der S-R Bindung entweder ein sekundäres, tertiäres oder aromatisch stabilisiertes Radikal ausbildet,
- für einen linearen, verzeigten oder cyclischen, gesättigten oder ein- oder mehrfach ungesättigten, optional ein- oder mehrfach substituierten Alkylrest steht, bevorzugt einen entsprechenden C₃-C₂₀-Alkylrest, insbesondere für sec.-Butyl, tert.-Butyl, iso-Propyl, 1-Buten-3-yl, 2-Chloro-1-buten-2-yl, Propionsaeure-2-yl, Propionitril-2-yl, 2-Methylpropannitril-2-yl, 2-Methylpropionsaeure-2-yl oder 1H,1H,2-Keto-3-oxo-4H,4H,5H,5H-perfluorundecanyl, oder
- für einen gesättigten oder ungesättigten, optional ein- oder mehrfach substituierten Carbo-oder Heterocyclylrest steht, inbesondere für Cyclohexyl, Cumyl oder Cyclohexan-1-nitril-1-yl,
- für einen Arylrest oder Heteroarylrest steht, ganz besonders bevorzugt für einen C₆-C₂₄-Arylrest, inbesondere Phenyl, Pyridinyl oder Anthracenyl,
- für einen Aralkylrest steht, ganz besonders bevorzugt für Benzyl, Phenylethyl oder 1-Methyl-1-phenyleth-2-yl, oder
- für Thiocarboxy, Carbonyl, Carboxy, Oxo, Thioxo, Epoxy, sowie Salze der zuvor genannten Verbindungen steht.

### Dithioester:

In einer weiteren bevorzugten Ausführungsform wird mindestens ein **Regler der allgemeinen Formel (VIe)** eingesetzt, 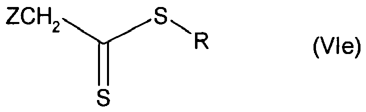 worin
- Z: alle für die allgemeine Formel (VI) gennanten Bedeutungen besitzen kann und
- R: die gleichen Bedeutungen wie Z in der allgemeinen Formel (VI) besitzen kann, allerdings mit der Einschränkung, dass R nach homolytischer Spaltung der S-R Bindung entweder ein sekundäres, tertiäres oder aromatisch stabilisiertes Radikal ausbildet.

Dieser bevorzugte Regler der allgemeinen Formel (VIe) ergibt sich aus dem Regler der allgemeinen Formel (VI), wobei
- n und m: jeweils = 0 sind,
- t: gleich 1 ist,
- X: für CH₂ steht,
- Z: die zuvor für die allgemeine Formel (VI) genannten Bedeutungen besitzt und
- R: die gleichen Bedeutungen wie Z in der allgemeinen Formel (VI) besitzen kann, allerdings mit der Einschränkung, dass R nach homolytischer Spaltung der S-R Bindung entweder ein sekundäres, tertiäres oder aromatisch stabilisiertes Radikal ausbildet.

Besonders bevorzugt wird ein Regler der oben genannten allgemeinen Formel (VIe), worin
- R: mit der Maßgabe, dass R nach homolytischer Spaltung der S-R Bindung entweder ein sekundäres, tertiäres oder aromatisch stabilisiertes Radikal ausbildet,
- für einen linearen oder verzeigten, gesättigten oder ein- oder mehrfach ungesättigten, optional ein- oder mehrfach substituierten Alkylrest steht, bevorzugt einen entsprechenden C₃-C₂₀-Alkylrest, insbesondere für sec.-Butyl, tert.-Butyl, iso-Propyl, 1-Buten-3-yl, 2-Chloro-1-buten-2-yl, Propionsaeure-2-yl, Propionitril-2-yl, 2- Methylpropannitril-2-yl, 2-Methylpropionsaeure-2-yl oder 1H,1H,2-Keto-3-oxo-4H,4H,5H,5H-perfluorundecanyl, oder
- für einen gesättigten oder ungesättigten, optional ein- oder mehrfach substituierten Carbo-oder Heterocyclylrest steht, inbesondere für Cyclohexyl, Cumyl oder Cyclohexan-1-nitril-1-yl,
- für einen (Hetero)Arylrest steht, ganz besonders bevorzugt für einen C₆-C₂₄-(Hetero)Arylrest, inbesondere Phenyl, Pyridinyl oder Anthracenyl,
- für einen (Hetero)Arylalkylrest steht, ganz besonders bevorzugt für einen C₇-C₂₅-(Hetero)Arylalkylrest, insbesondere für Benzyl, Phenylethyl oder 1-Methyl-1-phenyleth-2-yl, oder
- für Thiocarboxy, Carbonyl, Carboxy, Oxo, Thioxo, Epoxy, sowie Salze der genannten Verbindungen steht.

Alle vorgenannten Regler sind nach Methoden, die dem Fachmann aus dem Stand der Technik geläufig sind, synthetisierbar. Synthesevorschriften und weitere Verweise für Herstellvorschriften können beispielsweise aus Polymer 49 (2008) 1079-1131 sowie allen in dieser Anmeldung als Stand der Technik bereits genannten Schutzrechten und Literaturstellen entnommen werden. Eine Reihe der Regler sind auch bereits käuflich erhältlich.

Besonders geeignet sind als Regler in der Ausführungsform (2) des erfindungsgemäße Verfahrens Dodecylpropansäuretrithiocarbonat (DoPAT), Dibenzoyltrithiocarbonat (DiBenT), Cumylphenyldithioacetat (CPDA), Cumyldithiobenzoat, Phenylethyldithiobenzoat, Cyanoisopropyldithiobenzoat (CPDB), 2-Cyanopropyldodecyltrithiocarbonat, 2-Cyanoethyldithiobenzoat, 2-Cyanoprop-2-yl-dithiophenylacetat, 2-Cyanoprop-2-yl-dithiobenzoat, S-Thiobenzoyl-1H,1H, 2-Keto-3-oxa-4H,4H,5H,5H-perfluoroundecanthiol und S-Thiobenzoyl-1-phenyl-2-keto-3-oxa-4H,4H,5H,5H-perfluoroundecanthiol.

Üblicherweise werden in Ausführungsvariante (2) des erfindungsgemäßen Verfahrens 5 bis 2000 mol% des Reglers bezogen auf 1 mol des Initiators eingesetzt. Bevorzugt werden 20 bis 1000 mol% des Reglers bezogen auf 1 mol des Initiators eingesetzt.

Die in Ausführungsform (2) des erfindungsgemäßen Verfahrens einsetzbaren Verbindungen der allgemeinen Formel (VIb) sind aus der sogenannten RAFT-Technologie bekannt, siehe die oben dazu bereits zitierten Literaturstellen.

### Ausführungsvariante (3) des erfindungsgemäßen Verfahrens:

In Ausführungsvariante (3) des erfindungsgemäßen Verfahrens wird in Schritt (a) mindestens eine Verbindung ausgewählt aus der Gruppe bestehend aus den oben genannten Verbindungen (i) bis (xii) eingesetzt.
Bevorzugte **Mercaptane (i)** sind Alkylmercaptane, besonders bevorzugt sind C₁-C₁₆-Alkylmercaptane, die verzweigt oder unverzweigt sein können. Ganz besonders bevorzugt sind Methylmercaptan, Ethylmercaptan, n-Butylmercaptan, n-Hexylmercaptan, n-Octylmercaptan, n-Dodecylmercaptan und tert.-Dodecylmercaptane. Tert.-Dodecyl-mercaptane können sowohl in Form einzelner Isomere als auch in Form von Gemischen zweier oder mehr Isomere eingesetzt werden.

Bevorzugte **Mercaptoalkohole (ii)** sind aliphatische oder cycloaliphatische Mercaptoalkohole, insbesondere 2-Mercapto-1-ethanol, 3-Mercapto-1-propanol, 3-Mercaptopropan-1,2-diol (auch als Thioglycerin bekannt), 4-Mercapto-1-butanol und 2-Mercaptocyclohexanol.

Bevorzugte **Mercaptocarbonsäuren (iii)** sind Mercaptoessigsäure (auch als Sulfanylessigsäure bezeichnet), 3-Mercaptopropionsäure, Mercaptobutandisäure (auch als Mercaptobernsteinsäure bekannt), Cystein und N-Acetylcystein. Bevorzugte **Mercaptocarbonsäureester (iii)** sind Alkylthioglycolate, insbesondere Ethylhexylthioglycolat.

Eine bevorzugte **Thiocarbonsäure (iv)** ist Thioessigsäure.

Bevorzugte **Disulfide (v)** sind Xanthogendisulfide, besonders bevorzugt ist Diisopropylxanthogendisulfid.

Bevorzugte **Allylverbindungen (vii)** sind Allylalkohol oder Allylchlorid.

Ein bevorzugter **Aldehyd (viii)** ist Crotonaldehyd.

Bevorzugte **aliphatische oder araliphatische Halogenkohlenwasserstoffe (ix)** sind Chloroform, Tetrachlorkohlenstoff, Iodoform oder Benzylbromid.

Die vorgenannten Molekulargewichtsregler sind prinzipiell literaturbekannt (siehe K. C. Berger und G. Brandrup in J. Brandrup, E. H. Immergut, Polymer Handbook, 3. Aufl., John Wiley & Sons, New York, 1989, S. II/81 - II/141) und käuflich erhältlich oder können alternativ nach dem Fachmann aus der Literatur bekannten Verfahren hergestellt werden (siehe z.B. Chimie & Industrie, Vol 90 (1963), No 4, 358-368, US-A-2,531,602, DD 137 307, DD 160 222, US-A-3,137,735, WO-A-2005/082846, GB 823,824, GB 823,823, JP 07-316126, JP 07-316127, JP 07-316128).

Molekulargewichtsregler zeichnen sich dadurch aus, dass sie im Rahmen der Polymerisationsreaktion Kettenübertragungsreaktionen beschleunigen und damit die Herabsetzung des Polymerisationsgrades der resultierenden Polymeren bewirken. Die zuvor genannten Regler umfassen mono-, bi- oder polyfunktionale Regler, je nach Anzahl der funktionellen Gruppen im Molekül, die zu einer oder mehreren Kettenübertragungsreaktionen führen können.

Besonders bevorzugt handelt es sich bei dem im erfindungsgemäßen Verfahren einzusetzenden Molekulargewichtsregler um tert.-Dodecylmercaptane, sowohl in Form einzelner Isomere als auch in Form von Gemischen von zwei oder mehr Isomeren.

Tert.-Dodecymercaptane werden oft durch sauer katalysierte Addition von Schwefelwasserstoff an Olefine mit 12 Kohlenstoffen hergestellt. Als C₁₂-Olefin Ausgangsmaterial (auch als "C₁₂-Feed-stock" bezeichnet) werden überwiegend Oligomerengemische auf der Basis von tetramerisiertem Propen (auch "Tetrapropen" oder "Tetrapropylen" genannt), trimerisiertem Isobuten (auch "Triisobuten" oder "Triisobutylen" genannt), trimerisiertem n-Buten und dimerisiertem Hexen verwendet.

Ganz besonders bevorzugt werden im erfindungsgemäßen Verfahren als Molekulargewichtsregler ein oder mehrere tert-Dodecylmercaptane ausgewählt aus der Gruppe bestehend aus 2,2,4,6,6-Pentamethylheptanthiol-4, 2,4,4,6,6-Pentamethylheptanthiol-2, 2,3,4,6,6-Pentamethylheptanthiol-2, 2,3,4,6,6-Pentamethylheptanthiol-3 und beliebigen Mischungen von zwei oder mehr der vorgenannten Isomere eingesetzt.

Insbesondere wird in Variante (3) des erfindungsgemäßen Verfahrens ein Gemisch eingesetzt, das 2,2,4,6,6-Penta-methylheptanthiol-4, 2,4,4,6,6-Pentamethylheptanthiol-2, 2,3,4,6,6-Pentamethylheptanthiol-2 und 2,3,4,6,6-Pentamethylheptanthiol-3 enthält. Die Herstellung dieses Gemischs ist in EP-A-2 162 430 beschrieben.

Üblicher Weise werden in Variante (3) des erfindungsgemäßen Verfahrens 1 bis 5000 mol% des Molekulargewichtsreglers (i) bis (ix) bezogen auf 1 mol Initiator eingesetzt. Bevorzugt werden 5 bis 2000 mol% des Molekulargewichtsreglers bezogen auf 1 mol des Initiator eingesetzt.

### INITIATOREN:

Bei dem erfindungsgemäßen Verfahren handelt es sich um eine radikalische Polymerisation. Auf welche Weise diese initiiert wird, ist dabei nicht kritisch, insofern kommt eine Initiierung durch peroxidische Initiatoren, Azo-Initiatoren, Redox-Systeme oder auf photochemischem Weg in Frage. Unter diesen Initiatoren sind die Azo-Initiatoren bevorzugt.

Als **Azo-Initiatoren** können beispielsweise die folgenden Verbindungen eingesetzt werden: 2,2'-Azobis(isobutyronitril), 2,2'-Azobis(2-cyano-2-butan), Dimethyl-2,2'-azobisdimethyl-isobutyrat, 4,4'-Azobis(4-cyanopentansäure), 2-(t-Butylazo)-2-cyanopropan, 2,2'-Azobis[2-methyl-N-(1,1)-bis(hydroxymethyl)-2-hydroxyethyl] propionamid, 2,2'-Azobis[2-methyl-N-hydroxyethyl]-propionamid, 2,2'-Azobis(N,N-dimethylenisobutyr-amidine) dihydrochlorid, 2,2'-Azobis(2-amidinopropan)dihydrochlorid, 2,2'-Azobis(N,N'-dimethylenisobutyramin), 2,2'-Azobis(2-methyl-N-[1,1-bis(hydroxymethyl)-2-hydroxyethyl] propionamid), 2,2'-Azo-bis(2-methyl-N-[1,1-bis(hydroxymethyl)ethyl]propionamid), 2,2'-Azobis[2-methyl-N-(2-hydroxyethyl) propionamid], 2,2'-Azobis(isobutyramid)dihydrat, 2,2'-Azobis(2,2,4-trimethylpentan) 2,2'-Azobis(2-methylpropan), 1,1'-Azobis(cyclohexan-1-carbonitril), 2,2'-Azobis[N-(2-propenyl)-2-methylpropionamid], 1-[(1-Cyano-1-methylethyl)azo]formamid, 2,2'-Azobis(N-butyl-2-methylpropionamid), 2,2'-Azobis-(N-cyclohexyl-2-methylpropionamid) und 2,2'-Azobis(2,4,4-trimethylpentan).

Üblicherweise werden die Azo-Initiatoren in einer Menge 10⁻⁴ bis 10⁻¹ mol/l, bevorzugt in einer Menge von 10⁻³ bis 10⁻² mol/l eingesetzt. Durch Abstimmung des Verhältnisses der eingesetzten Initiatormenge zur Menge des verwendeten Reglers gelingt es, sowohl die Reaktionskinetik als auch die Molekularstruktur (Molekulargewicht, Polydispersität) gezielt zu beeinflussen.

Als **peroxidische Initiatoren** können beispielsweise die folgenden Peroxo-Verbindungen, die eine -O-O-Einheit aufweisen, eingesetzt werden: Wasserstoffperoxid, Peroxodisulfate, Peroxodiphosphate, Hydroperoxide, Persäuren, Persäureester, Persäureanhydride und Peroxide mit zwei organischen Resten. Als Salze der Peroxodischwefelsäure und der Peroxodiphosphorsäure können Natrium-, Kalium- und Ammoniumsalze eingesetzt werden. Geeignete Hydroperoxide sind z.B. t-Butylhydroperoxid, Cumolhydroperoxid, Pinanhydroperoxid und p-Menthanhydroperoxid. Geeignete Peroxide mit zwei organischen Resten sind Dibenzoylperoxid, 2,4-Dichlorbenzoylperoxid, 2,5-Dimethylhexan-2,5-di-t.butylperoxid, Bis-(t-butylperoxy-isopropyl)benzol, t-Butylcumylperoxid, Di-t-butylperoxid, Dicumylperoxid, t-Butylperbenzoat, t-Butylperacetat, 2,5-Dimethylhexan-2,5-diperbenzoat, t-Butyl-per-3,5,5-trimethylhexanoat. Bevorzugt wird p-Menthanhydroperoxid, Cumolhydroperoxid oder Pinanhydroperoxid eingesetzt. In einer alternativen Ausführungsform werden Azo- oder peroxidische Initiatoren mit einer verlängerten Zerfallszeit eingesetzt. Hierbei hat es sich bewährt, den Azoinitiator bzw. den peroxidischen Initiator so zu wählen, dass bei einer Temperatur von 70°C bis 200 °C, bevorzugt 80°C bis 175°C, besonders bevorzugt 85°C bis 160°C und insbesondere 90°C bis 150°C, die Halbwertszeit des jeweiligen Initiators im gewählten Lösungsmittel 10 Stunden oder mehr als 10 Stunden beträgt. Bevorzugt sind dabei Azoinitatoren, die bei einer Temperatur von 70°C bis 200 °C, bevorzugt 80°C bis 175°C, besonders bevorzugt 85°C bis 160°C und ganz besonders bevorzugt 90°C bis 150°C, eine Halbwertszeit von 10 Stunden oder mehr als 10 Stunden im gewählten Lösungsmittel besitzen. Besonders bevorzugt werden Azoinitatoren der folgenden Strukturformeln (Ini-1)- (Ini-6) eingesetzt:

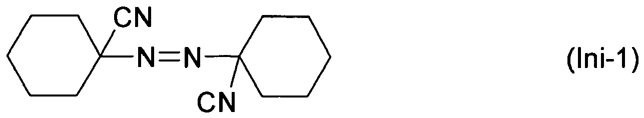

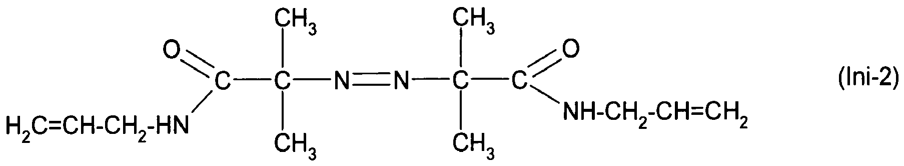

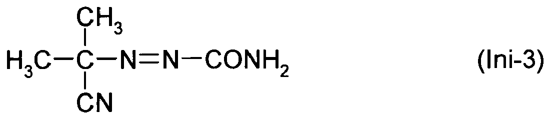

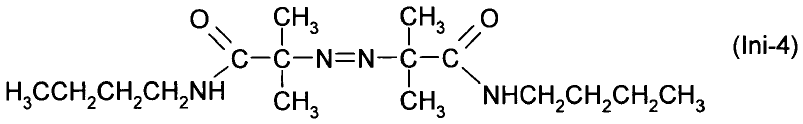

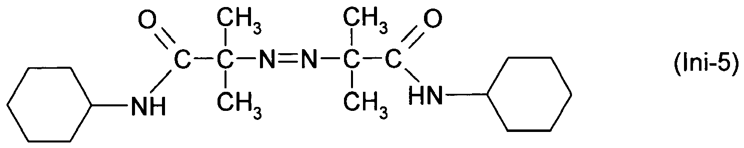

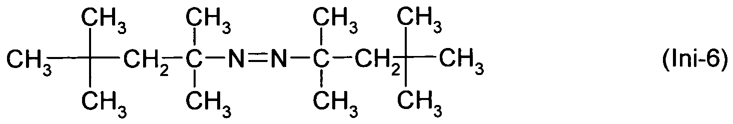

### Ganz besonders bevorzugt ist der Einsatz der Initiatoren der Formel (Ini-2) und (Ini-3).

Die vorgenannten Azoinitiatoren der Strukturformeln (Ini-1) - (Ini-6) sind käuflich erhältlich, beispielsweise von Wako Pure Chemical Industries, Ltd..

Der Begriff der Halbwertszeit ist dem Fachmann im Zusammenhang mit Initiatoren geläufig. Nur als Beispiel: Eine Halbwertszeit von 10 Stunden in einem Lösungsmittel bei einer bestimmten Temperatur bedeutet konkret, dass sich unter diesen Bedingungen nach 10 Stunden die Hälfte des Initiators zersetzt hat.

Bei Einsatz der vorgenannten bevorzugten Initiatoren mit einer höheren Zerfallstemperatur, insbesondere der genannten Azoinitiatoren lassen sich Nitrilkautschuke mit vergleichsweise höheren mittleren Molekulargewichten Mw (Gewichtsmittel des Molekulargewichts) und Mn (Zahlenmittel des Molekulargewichts) synthetisieren, die sich gleichzeitig weiterhin durch eine hohe Linearität auszeichnen. Dies kommt zum Ausdruck durch entsprechend niedrige Werte der Mooney-Relaxation, gemessen durch ISO 289 Teil 1 & 2 oder alternativ nach ASTM D1646.

Als **Redox-Systeme** können die folgenden Systeme aus einem Oxidationsmittel und einem Reduktionsmittel eingesetzt werden. Die Wahl geeigneter Mengen an Oxidations- und Reduktionsmittel ist dem Fachmann hinreichend geläufig.

Bei der Verwendung von Redoxsystemen verwendet man häufig zusätzlich Salze von Übergangsmetallverbindungen wie Eisen, Cobalt oder Nickel in Kombination mit geeigneten Komplexbildnern wie Natrium-Ethylendiamintetraacetat, Natrium-Nitrilotriacetat sowie Trinatriumphosphat oder Tetrakaliumdiphosphat.

Als **Oxidationsmittel** können dabei beispielsweise alle Peroxoverbindungen, die zuvor für die **peroxidischen Initiatoren** genannt wurden, eingesetzt werden.

Als **Reduktionsmittel** können im erfindungsgemäßen Verfahren beispielsweise die folgenden eingesetzt werden: Natriumformaldehydsulfoxylat, Natriumbenzaldehydsulfoxylat, reduzierende Zucker, Ascorbinsäure, Sulfenate, Sulfinate, Sulfoxylate, Dithionit, Sulfit, Metabisulfit, Disulfit, Zucker, Harnstoff, Thioharnstoff, Xanthogenate, Thioxanthogenate, Hydraziniumsalzen, Amine und Aminderivate wie Anilin, Dimethylanilin, Monoethanolamin, Diethanolamin oder Triethanolamin. Bevorzugt wird Natriumformaldehydsulfoxylat eingesetzt.

Die Initiierung der radikalischen Polymerisation kann auch **photochemisch** wie im Folgenden beschrieben erfolgen: Hierzu wird dem Reaktionsgemisch ein Photoinitiator zugesetzt, welcher durch Bestrahlung mittels Licht geeigneter Wellenlänge angeregt wird und eine radikalische Polymerisation initiiert. Es ist hierbei anzumerken, dass für die optimale Initiierung der radikalischen Polymerisation die Bestrahlungsdauer von der Leistung des Strahlers, von dem Abstand zwischen dem Strahler und dem Reaktionsgefäß sowie von der Bestrahlungsfläche abhängig ist. Es ist jedoch für den Fachmann ohne weiteres durch verschiedene Testreihen möglich, die optimale Bestrahlungsdauer herauszufinden. Auch die Wahl der geeigneten Inititatormenge ist für den Fachmann ohne Probleme möglich und dient zur Beeinflussung des Zeit-Umsatz-Verhaltens der Polymerisation.

Als photochemische-Initiatoren können beispielsweise die Folgenden eingesetzt werden: Benzophenon, 2-Methylbenzophenon, 3,4-Dimethylbenzophenon, 3-Methylbenzophenon, 4,4'-Bis(diethylamino)benzophenon, 4,4'-Di-hydroxybenzophenon, 4,4'-Bis[2-(1-propenyl)phenoxy]benzophenon, 4-(Diethylamino)benzophenon, 4-(Dimethylamino)benzophenon, 4-Benzoylbiphenyl, 4-Hydroxybenzophenon, 4-Methylbenzophenon, Benzophenon-3,3',4,4'-tetracarboxyldianhydrid, 4,4'-Bis(dimethylamino)benzophenon, Acetophenon, 1-Hydroxycyclohexylphenylketon, 2,2-Diethoxyacetophenon, 2,2-Dimethoxy-2-phenylacetophenon, 2-Benzyl-2-(dimethylamino)-4'-morpholino-butyrophenon, 2-Hydroxy-2-methylpropiophenon, 2-Hydroxy-4'-(2-hydroxyethoxy)-2-methylpropiophenon, 3'-Hydroxyacetophenon, 4'-Ethoxyacetophenon, 4'-Hydroxyacetophenon, 4'-Phenoxyacetophenon, 4'-*tert*-Butyl-2',6'-dimethylacetophenon, 2-Methyl-4'-(methylthio)-2-morpholinopropiophenon, Diphenyl-(2,4,6-trimethylbenzoyl)-phosphinoxid, Phenylbis(2,4,6-trimethylbenzoyl)phosphinoxid, Methylbenzoylformat, Benzoin, 4,4'-Dimethoxybenzoin, Benzoinmethylether, Benzoinethylether, Benzoinisopropylether, Benzoinisobutylether, 4,4'-Dimethylbenzil, Hexachlorocyclopentadiene oder Kombinationen daraus.

### LÖSUNGSMITTEL:

Das erfindungsgemäße Verfahren wird in einem Gemisch von mindestens zwei Lösungsmitteln durchgeführt, wobei das erste Lösungsmittel in einer Menge im Bereich von 70 bis 99,9 Vol%, bezogen auf die Summe aller eingesetzten Lösungsmittel eingesetzt wird. Dieses erste Lösungsmittel wird im Folgenden auch als "Hauptlösungsmittel" bezeichnet. Das zweite (und optional ein oder mehrere weitere) Lösungsmittel eingesetzt (im Folgenden in Summe auch als "Zusatzlösungsmittel" bezeichnet) werden zusammen demzufolge in einer Menge im Bereich von 0,01 bis 30 Vol% bezogen auf die Summe aller eingesetzten Lösungsmittel eingesetzt.

Bevorzugt wird das Hauptlösungsmittel in einer Menge im Bereich von 75 bis 99,9 Vol%, besonders bevorzugt von 85 bis 99,5 Vol%, bezogen auf die Summe aller eingesetzten Lösungsmittel eingesetzt und das oder die Zusatzlösungsmittel bevorzugt zusammen in einer Menge von 0,1 bis 25 Vol%, besonders bevorzugt von 0,5 bis 15 Vol% eingesetzt, wiederum bezogen auf die Summe aller eingesetzten Lösungsmittel.

Als **Hauptlösungsmittel** geeignet sind beispielsweise Dimethylacetamid, Monochlorbenzol, Toluol, Ethylacetat, 1,4-Dioxan, Acetonitril, tert.-Butanol, tert.-Butylnitril, Dimethylcarbonat, Methylacetat, Isobutyronitril und Aceton.

Bevorzugt sind **Hauptlösungsmittel**, welche einen Hildebrand'schen Lösungsparameter δ (δ = ((ΔHᵥ-RT)/Vₘ)^{½} [(MPa)^{½}]) (Vₘ = molares Volumen; ΔHᵥ = Verdampfungsenthalpie; R = ideale Gaskonstante)) in einem Bereich zwischen 15,5 und 26 (MPa) ^{½}besitzen. Bevorzugt werden solche Lösungsmittel eingesetzt, die einen Lösungsparameter zwischen 16 und 25 (MPa)^{½} besitzen.

Als **Zusatzlösungsmittel** geeignet sind beispielsweise alle oben genannten Lösemittel, sofern es sich bei dem Hauptlösungsmittel um ein anderes als das Zusatzlösungsmittel handelt. Weiterhin als Zusatzlösungsmittel geeignet sind: Wasser, Di-isopropylether, Di-n-propylether, Diethylcarbonat, Isopropylmethylketon, Butylacetat, Octansäure, Isopropylacetat, Propylacetat, Pivalonitril, Toluol, Methyl-tert-butylether, 1-Butanol, 2-Ethoxyethanol, Phenoxyethanol, 2-Propanol, Benzylalkohol, 1-Propanol, 2-Methoxymethanol, N,N-Dimethylformamid, Ethanol, 1,3-Butandiol, Diethylenglycol, Methanol.

Große Mengen Wasser, wie im Fall der Emulsionspolymerisation sind im erfindungsgemäßen Verfahren nicht im Reaktionssystem vorhanden. Geringere Mengen Wasser in der Größenordnung von bis zu 5 Gew.%, bevorzugt bis 1 Gew.% (bezogen auf die Menge des organischen Lösungsmittels) können durchaus im Reaktionssystem zugegen sein. Wird Wasser zusätzlich als Zusatzlösungsmittel verwendet, ist es wichtig, dass die gesamte Menge des anwesenden Wassers so gehalten werden muss, dass es nicht zu einer Ausfällung des sich bildenden NBR-Polymers kommt. Es sei an dieser Stelle klar gestellt, dass es sich bei dem erfindungsgemäßen Verfahren nicht um eine Emulsionspolymerisation handelt.

Ausschlaggebend für die Eignung eines Lösungsmittels ist, dass der hergestellte Nitrilkautschuk bei der Reaktionstemperatur, die sich üblicher Weise im unten angegebenen Bereich bewegt, vollständig in Lösung bleibt. Nicht eingesetzt werden können Lösungsmittel, die als Transferreagenzien in die Reaktion eingreifen, z.B. Tetrachlorkohlenstoff, Thiole und weitere dem Fachmann als solche bekannte Solventien dieser Art.

Bevorzugt werden wird Monochlorbenzol als Hauptlösungsmittel in Kombination mit einem oder mehreren, bevorzugt einem weiteren Lösungsmittel ausgewählt aus der Gruppe bestehend aus Wasser, Di-isopropylether, Di-n-propylether, Diethylcarbonat, Isopropylmethylketon, Butylacetat, Octansäure, Isopropylacetat, Propylacetat, Pivalonitril, Toluol, Methyl-tert-butylether, 1-Butanol, 2-Ethoxyethanol, Phenoxyethanol, 2-Propanol, Benzylalkohol, 1-Propanol, 2-Methoxymethanol, N,N-Dimethylformamid, Ethanol, 1,3-Butandiol, Diethylenglycol, Methanol, Isobutyronitril, Dimethylcarbonat, Trimethylacteonitril, Methylacetat. Besonders bevorzugt ist die Kombination aus Monochlorbenzol als Hauptlösungsmittel und N,N-Dimethylacetamid als Zusatzlösungsmittel.

Weitere bevorzugte Kombinationen eines Hauptlösungsmittel in Kombination mit einem oder mehreren, bevorzugt einem weiteren Lösungsmittel sind: tert.-Butanol, 1,4-Dioxan, Acetonitril, Toulol, Isobutyronitril, Isopropylmethylketon, N,N-Dimethylacetamid, Dimethylcarbonat, Trimethylacteonitril, Methylacetat als Hauptlösungsmittel mit einem weiteren Lösungsmittel ausgewählt aus der Gruppe ungleich des Hauptlösungsmittels bestehend aus Wasser, Di-isopropylether, Di-n-propylether, Diethylcarbonat, Isopropylmethylketon, Butylacetat, Octansäure, Isopropylacetat, Propylacetat, Pivalonitril, Toluol, Methyl-tert-butylether, 1-Butanol, 2-Ethoxyethanol, Phenoxyethanol, 2-Propanol, Benzylalkohol, 1-Propanol, 2-Methoxymethanol, N,N-Dimethylformamid, Ethanol, 1,3-Butandiol, Diethylenglycol, Methanol, Isobutyronitril, Dimethylcarbonat, Trimethylacteonitril und Methylacetat.

### TEMPERATUR:

Das erfindungsgemäße Verfahren wird üblicher Weise bei einer Temperatur in einem Bereich von 5°C bis 150°C durchgeführt, bevorzugt in einem Bereich von 8°C bis 130°C, besonders bevorzugt in einem Bereich von 9°C bis 120°C und insbesondere in einem Bereich von 10°C bis 110°C. Wird die Temperatur noch tiefer gewählt, ist die Polymerisation entsprechend verlangsamt. Bei noch deutlich höheren Temperaturen ist es nicht ausgeschlossen, dass der eingesetzte Initiator zu schnell zerfällt bzw. das RAFT-Agens zersetzt wird. Insbesondere beim Einsatz peroxidischer Initiatoren ist es nicht ausgeschlossen, dass es u.U. zur Oxidation des Reglers kommt.

### UMSETZUNG:

Im Fall der Initiierung durch Peroxoverbindungen oder Azo-Initiatoren erfolgt die Durchführung des erfindungsgemäßen Verfahrens üblicherweise so, dass das α,β-ungesättigte Nitril und die optional eingesetzten weiteren copolymerisierbaren Monomere, das Lösungsmittel, der Initiator sowie der/die Regle rin einem Reaktionsgefäß vorgelegt werden und anschließend das oder die konjugierte Diene zudosiert wird/werden. Die Polymerisation wird im Anschluss durch Temperaturerhöhung gestartet.

Im Falle einer Initiierung mittels eines Redox-Systems wird typischerweise das Oxidationsmittel zusammen mit einem der Monomeren in das Reaktionsgefäß dosiert. Die Polymerisation wird im Anschluss durch Zusatz des Reduktionsmittels gestartet.

Um spezielle Verhältnisse der jeweiligen Monomeren im Co-/Terpolymer zu erhalten, ist es sinnvoll und dem Fachmann durchweg geläufig, entsprechende Modifikationen bezüglich der Dosierung vorzunehmen (z.B. durch Nachdosieren des jeweiligen Monomers, von Initiator-Mengen, ReglerMengen oder Lösungsmittel). Diese Nachdosierungen können dabei entweder kontinuierlich oder aber auch in einzelnen Portionen diskontinuierlich erfolgen. Auch die Nachdosierung der Monomere oder aber die Nachdosierung von Initiator kann entweder kontinuierlich oder aber auch in einzelnen Portionen diskontinuierlich erfolgen.

Zur Einstellung eines geeigneten Molekulargewichts sowie zwecks Erreichen des gewünschten Umsatzes hat es sich in einer Ausführungsform des erfindungsgemäßen Verfahrens bewährt, sowohl den Initiator als auch Lösungsmittel im Verlauf der Polymerisationsreaktion ein- oder mehrmals nachzudosieren.

### Nitrilkautschuke:

**Bei Ausführungsvariante (2) des erfindungsgemäßen Verfahrens** zeichnen sich die erhaltenen Nitrilkautschuke (ebenso wie die daraus durch Hydrierung hervorgehenden hydrierten Nitrilkautschuke) durch die Anwesenheit von ein oder mehreren Strukturelementen der allgemeinen Formeln (I), (II), (III), (IV) oder (V) entweder in der Polymerhauptkette oder als Endgruppen aus. Derartige optional hydrierte Nitrilkautschuke können aufgrund dieser Strukturelemente/Endgruppen Folgeumsetzungen mit anderen polymerisierbaren Monomeren unterworfen werden, da die Strukturelemente/Endgruppen über eine weitere Fragmentierung als RAFT Agenzien fungieren können. Auf diesem Weg wird der gezielte Aufbau verschiedenster Polymerarchitekturen möglich. Darüberhinaus lassen sich diese erfindungsgemäßen optional hydrierten Nitrilkautschuke auch einfacher vernetzen als herkömmliche Nitrilkautschuke, da die Strukturelemente/Endgruppen den üblichen Vernetzungsagenzien, insbesondere denen auf Schwefelbasis strukturell ähnlich sind. Insofern kann eine ausreichende Vernetzungsdichte mit den erfindungsgemäßen optional hydrierten Nitrilkautschuken bereits mit einer geringeren Menge an Vernetzer erreicht werden. Zudem wird durch die Vernetzung über die Endgruppen die Zahl loser Polymerkettenenden im Vulkanisat verringert, wodurch es zu verbesserten Eigenschaften wie z.B. den dynamischen Eigenschaften kommt.

Diese Nitrilkautschuke, die gegebenenfalls hydriert sind, enthaltend
(i) Wiederholungseinheiten abgeleitet von mindestens einem konjugierten Dien, mindestens einem α,β-ungesättigten Nitril und gegebenenfalls einem oder mehreren weiteren copolymerisierbaren Monomeren sowie
(ii) ein oder mehrere Strukturelemente der allgemeinen Formeln (I), (II), (III), (IV) oder (V) 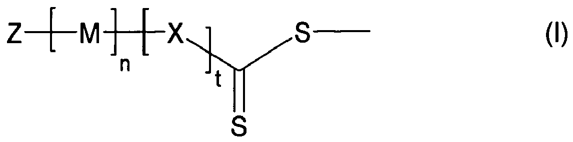 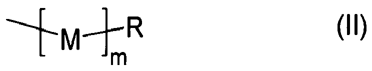 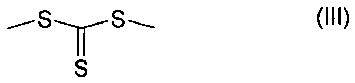 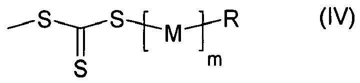 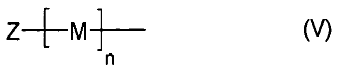
wobei
- **Z**: für H, einen linearen oder verzweigten, gesättigten, ein- oder mehrfach ungesättigten Alkylrest, einen gesättigten, ein- oder mehrfach ungesättigten Carbo- oder Heterocyclylrest, Aryl, Heteroaryl, Arylalkyl, Heteroarylalkyl, Alkoxy, Aryloxy, Heteroaryloxy, Amino, Amido, Hydroxyimino, Carbamoyl, Alkoxycarbonyl, F, Cl, Br, I, Hydroxy, Phosphonato, Phosphinato, Alkylthio, Arylthio, Sulfanyl, Thiocarboxy, Sulfinyl, Sulfono, Sulfino, Sulfeno, Sulfonsäuren, Sulfamoyl, Silyl, Silyloxy, Nitril, Carbonyl, Carboxy, Oxycarbonyl, Oxysulfonyl, Oxo, Thioxo, Borate, Selenate, Epoxy, Cyanate, Thiocyanate, Isocyanate, Thioisocyanate und Isocyanide,
- **M**: für Wiederholungseinheiten eines oder mehrerer, ein- oder mehrfach ungesättigter Monomeren steht, umfassend konjugierte oder nicht-konjugierte Diene, Alkine und Vinylverbindungen, oder für ein Strukturelement, welches sich ableitet Polymeren umfassend Polyether, insbesondere Polyalkylenglykolether und Polyalkylenoxide, Polysiloxane, Polyole, Polycarbonate, Polyurethane, Polyisocyanate, Polysaccharide, Polyester und Polyamide,
- **n und m**: gleich oder verschieden sind und jeweils im Bereich von 0 bis 10.000 liegen,
- **t**: 0 oder 1 ist, sofern n= 0, und gleich 1 ist, sofern n ≠ 0,
- **X**: für C(Z₂), N(Z), P(Z), P(=O)(Z), O, S, S(=O) oder S(=O)₂ steht, wobei Z in diesen Resten die gleiche Bedeutungen besitzen kann, wie zuvor ausgeführt und
- **R**: **(a)** für den Fall, dass m ≠ 0 ist, die gleichen Bedeutungen besitzen kann wie der Rest Z und
**(b)** für den Fall, dass m = 0 ist, für H, einen linearen oder verzweigten, gesättigten, ein- oder mehrfach ungesättigten Alkylrest, einen gesättigten, ein- oder mehrfach ungesättigten Carbo-oder Heterocyclylrest, Aryl, Heteroaryl, Arylalkyl, Heteroarylalkyl, Alkoxy, Aryloxy, Heteroaryloxy, Amino, Amido, Carbamoyl, Alkoxy, Aryloxy, Alkylthio, Arylthio, Sulfanyl, Thiocarboxy, Sulfmyl, Sulfono, Sulfino, Sulfeno, Sulfonsäuren, Sulfamoyl, Carbonyl, Carboxy, Oxycarbonyl, Oxysulfonyl, Oxo, Thioxo, Epoxy, Cyanate, Thiocyanate, Isocyanate, Thioisocyanate oder Isocyanide steht.

Die in den vorgenannten Resten Z und R genannten Bedeutungen können jeweils ein- oder mehrfach substituiert sein. Hier gilt identisch das bereits für die allgemeine Formel (VI) zu Z und R ausgeführte. Auch die zur allgemeinen Formel (VI) gemachten Ausführungen bezüglich des Einschluss einiger Bedeutungen für Z und R (in Form von Salzen der genannten Reste, von organometallischen Salzen, als Liganden für metallorganische Komplexverbindungen sowie die Anbindung über Linker an Festphasen bzw. Trägersubstanzen) gelten identisch für Z und R in den allgemeinen Strukturelementen (I)-(V). Auch die zur allgemeinen Formel (VI) gemachten Ausführungen bezüglich der optionalen Substitution der sich hinter M verbergenden Bedeutungen gilt identisch für das allgemeine Strukturelement (I), (II), (IV) und (V).

Bevorzugt lassen sich über Ausführungsvariante (2) des erfindungsgemäßen Verfahren gegebenenfalls hydrierte Nitrilkautschuke erhalten, die Strukturelemente (ii) der allgemeinen Formeln (VIb-1) und (VIb-2) aufweisen, 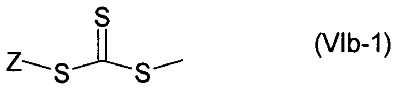 und

- R (VIb-2)

worin
- Z: die zuvor für die allgemeine Formel (I) genannten Bedeutungen besitzt und
- R: die zuvor für die allgemeine Formel (I) genannten Bedeutungen besitzt, allerdings mit der Einschränkung, dass R nach homolytischer Spaltung der Bindung zum nächsten gebundenen Atom im Nitrilkautschuk entweder ein sekundäres, tertiäres oder aromatisch stabilisiertes Radikal ausbildet.

Es hat sich insbesondere bewährt, dass Z und R hierbei verschieden sind.
Diese Strukturelemente sind in den Nitrilkautschuken als Endgruppen enthalten und ergeben sich bei Einsatz der bevorzugten Regler der allgemeinen Formel (VIb).

In einer bevorzugten Ausführungsform des erfindungsgemäßen Verfahrens nach Variante (2) werden Nitrilkautschuke erhalten, die als allgemeine Strukturelemente (ii) die Endgruppe n(VIb-1) und (VIb-2) enthalten, worin R mit der Maßgabe, dass R nach homolytischer Spaltung der Bindung zum nächsten gebundenen Atom entweder ein sekundäres, tertiäres oder aromatisch stabilisiertes Radikal ausbildet,
- für einen linearen oder verzweigten, gesättigten oder ein- oder mehrfach ungesättigten, optional ein- oder mehrfach substituierten Alkylrest steht, bevorzugt für einen entsprechenden C₃-C₂₀-Alkylrest, insbesondere für sec.-Butyl, tert.-Butyl, iso-Propyl, 1-Buten-3-yl, 2-Chloro-1-buten-2-yl, Propionsaeure-2-yl, Propionitril-2-yl, 2-Methylpropannitril-2-yl, 2-Methylpropionsaeure-2-yl oder 1H,1H,2-Keto-3-oxo-4H,4H,5H,5H-perfluorundecanyl, oder
- für einen gesättigten oder ein- oder mehrfach ungesättigten, optional ein- oder mehrfach substituierten Carbo- oder Heterocyclylrest steht, inbesondere für Cyclohexyl, Cumyl oder Cyclohexan-1-nitril-1-yl,
- für einen (Hetero)Arylrest steht, ganz besonders bevorzugt für einen C₆-C₂₄-(Hetero)arylrest, inbesondere für Phenyl, Pyridinyl oder Anthracenyl,
- für einen (Hetero)Aralkylrest steht, ganz besonders bevorzugt für Benzyl, Phenylethyl oder 1-Methyl-1-phenyleth-2-yl, oder
- für Thiocarboxy, Carbonyl, Carboxy, Oxo, Thioxo, Epoxy, sowie Salze der zuvor genannten Verbindungen steht.

In einer besonders bevorzugten Ausführungsform des erfindungsgemäßen Verfahrens nach Variante (2) werden gegebenenfalls hydrierte Nitrilkautschuke erhalten, die als allgemeine Strukturelemente (ii) 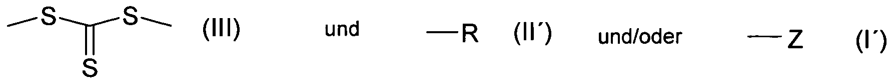 aufweisen, wobei
- Z: die gleichen Bedeutungen aufweisen kann wie in der allgemeinen Formel (I) und
- R: die gleichen Bedeutungen aufweisen kann wie in der allgemeinen Formel (II) für m=0, und
- R und Z: gleich oder verschieden sind, allerdings jeweils mit der Maßgabe, dass R und Z nach homolytischer Spaltung ihrer Bindung zum jeweils nächsten Atom im optional hydrierten Nitrilkautschuk jeweils ein sekundäres, tertiäres oder aromatisch stabilisiertes Radikal ausbilden.

Gegebenenfalls hydrierte Nitrilkautschuke mit den vorgenannten allgemeinen Strukturelementen (ii) werden erhalten, wenn als Regler eine Verbindung der allgemeinen Strukturformel (VIb) eingesetzt wird, worin Z die gleichen Bedeutungen besitzt wie in der allgemeinen Formel (VI) und R die gleichen Bedeutungen besitzt wie in der allgemeinen Formel (VI) für die Variante b) mit m=0, und R und Z gleich oder verschieden sind, allerdings jeweils mit der Maßgabe, dass R und Z nach homolytischer Spaltung ihrer Bindung zum nächstgelegenen Schwefel im Regler jeweils ein sekundäres, tertiäres oder aromatisch stabilisiertes Radikal ausbilden.

In einer weiteren besonders bevorzugten Ausführungsform des erfindungsgemäßen Verfahrens nach Variante (2) werden gegebenenfalls hydrierte Nitrilkautschuke erhalten, die als allgemeinen Strukturelemente (ii) die Elemente (III) und (II') und/oder (I') enthalten, worin
- R und Z: gleich oder verschieden sind und mit der Maßgabe, dass R und Z nach homolytischer Spaltung der Bindung zum jeweils nächsten gebundenen Atom jeweils ein sekundäres, tertiäres oder aromatisch stabilisiertes Radikal ausbilden,
- für einen linearen oder verzweigten, gesättigten oder ein- oder mehrfach ungesättigten, optional ein- oder mehrfach substituierten Alkylrest stehen, bevorzugt für einen entsprechenden C₃-C₂₀-Alkylrest, insbesondere für sec.-Butyl, tert.-Butyl, iso-Propyl, 1-Buten-3-yl, 2-Chloro-1-buten-2-yl, Propionsaeure-2-yl, Propionitril-2-yl, 2-Methylpropannitril-2-yl, 2-Methylpropionsaeure-2-yl oder 1H,1H,2-Keto-3-oxo-4H,4H,5H,5H-perfluorundecanyl, oder
- für einen gesättigten oder ein- oder mehrfach ungesättigten, optional ein- oder mehrfach substituierten Carbo- oder Heterocyclylrest stehen, inbesondere für Cyclohexyl, Cumyl oder Cyclohexan-1-nitril-1-yl,
- für einen (Hetero)Arylrest stehen, ganz besonders bevorzugt für einen C₆-C₂₄-(Hetero)arylrest, inbesondere für Phenyl, Pyridinyl oder Anthracenyl,
- für einen (Hetero)Aralkylrest stehen, ganz besonders bevorzugt für Benzyl, Phenylethyl oder 1-Methyl-1-phenyleth-2-yl, oder
- für Thiocarboxy, Carbonyl, Carboxy, Oxo, Thioxo, Epoxy, sowie Salze der zuvor genannten Verbindungen stehen.

In einer weiteren besonders bevorzugten Ausführungsform des erfindungsgemäßen Verfahrens nach Variante (2) werden gegebenenfalls hydrierte Nitrilkautschuke erhalten, die als allgemeine Strukturelemente (ii) 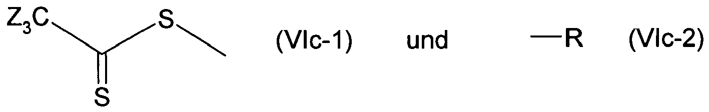 enthalten, worin
- Z: die zuvor für die allgemeine Formel (I) genannten Bedeutungen besitzt,
- R: die zuvor für die allgemeine Formel (II) genannten Bedeutungen besitzt, allerdings mit der Einschränkung, dass R nach homolytischer Spaltung der Bindung zum nächsten Atom im gegebenenfalls hydrierten Nitrilkautschuk ein sekundäres, tertiäres oder aromatisch stabilisiertes Radikal ausbildet.

Diese Strukturelemente sind in den optional hydrierten Nitrilkautschuken als Endgruppen enthalten und ergeben sich bei Einsatz der bevorzugten Regler der allgemeinen Formel (VIc).

In einer weiteren besonders bevorzugten Ausführungsform des erfindungsgemäßen Verfahrens nach Variante (2) werden gegebenenfalls hydrierte Nitrilkautschuke erhalten, die als allgemeine Strukturelemente (ii) die Strukturelemente (VIc-1) und (VIc-2) enthalten, worin
- R: mit der Maßgabe, dass R nach homolytischer Spaltung der Bindung zum nächsten Atom im gegebenenfalls hydrierten Nitrilkautschuk ein sekundäres, tertiäres oder aromatisch stabilisiertes Radikal ausbildet.,
- für einen linearen oder verzweigten, gesättigten oder ein- oder mehrfach ungesättigten, optional ein- oder mehrfach substituierten Alkylrest steht, bevorzugt für einen entsprechenden C₃-C₂₀-Alkylrest, insbesondere für sec.-Butyl, tert.-Butyl, iso-Propyl, 1-Buten-3-yl, 2-Chloro-1-buten-2-yl, Propionsaeure-2-yl, Propionitril-2-yl, 2-Methylpropannitril-2-yl, 2-Methylpropionsaeure-2-yl oder 1H,1H,2-Keto-3-oxo-4H,4H,5H,5H-perfluorundecanyl, oder
- für einen gesättigten oder ein- oder mehrfach ungesättigten, optional ein- oder mehrfach substituierten Carbo- oder Heterocyclylrest steht, inbesondere für Cyclohexyl, Cumyl oder Cyclohexan-1-nitril-1-yl,
- für einen (Hetero)Arylrest steht, ganz besonders bevorzugt für einen C₆-C₂₄-(Hetero)arylrest, inbesondere für Phenyl, Pyridinyl oder Anthracenyl,
- für einen (Hetero)Aralkylrest steht, ganz besonders bevorzugt für Benzyl, Phenylethyl oder 1-Methyl-1-phenyleth-2-yl, oder
- für Thiocarboxy, Carbonyl, Carboxy, Oxo, Thioxo, Epoxy, sowie Salze der zuvor genannten Verbindungen steht.

**Bei allen drei Ausführungsvarianten (1) - (3) des erfindungsgemäßen Verfahrens** zeichnen sich die erhaltenen Nitrilkautschuke ebenso wie die daraus optional durch Hydrierung erhaltenen hydrierten Nitrilkautschuke dadurch aus, dass sie im Gegensatz zu entsprechenden Kautschuken, die über die Emulsionspolymerisation gemäß dem Stand der Technik erhalten werden, vollkommen emulgatorfrei sind und auch keine Salze enthalten, wie sie üblicherweise zur Koagulation der Latices nach der Emulsionspolymerisation zwecks Ausfällung des Nitrilkautschuks eingesetzt werden.

Über das erfindungsgemäße Verfahren lassen sich in allen drei Varianten die folgenden Monomere co- bzw. terpolymerisieren:

Das **konjugierte Dien** im Nitrilkautschuk kann von jeder Natur sein. Bevorzugt werden (C₄-C₆) konjugierte Diene eingesetzt. Besonders bevorzugt sind 1,2-Butadien, 1,3-Butadien, Isopren, 2,3-Dimethylbutadien, Piperylen oder Gemische daraus. Insbesondere bevorzugt sind 1,3-Butadien und Isopren oder Gemische daraus. Ganz besonders bevorzugt ist 1,3-Butadien.

Als **α,β-ungesättigtes Nitril** kann jedes bekannte α,β-ungesättigte Nitril eingesetzt werden, bevorzugt sind (C₃-C₅)-α,β-ungesättigte Nitrile wie Acrylnitril, Methacrylnitril, Ethacrylnitril oder Mischungen davon. Besonders bevorzugt ist Acrylnitril.

Ein besonders bevorzugter Nitrilkautschuk ist ein Copolymer aus Acrylnitril und 1,3-Butadien.

Als weitere copolymerisierbare Termonomere können beispielsweise aromatische Vinylmonomere, bevorzugt Styrol, α-Methylstyrol und Vinylpyridin, **fluorhaltige Vinylmonomere,** bevorzugt Fluorethylvinylether, Fluorpropylvinylether, o-Fluormethylstyrol, Vinylpentafluorbenzoat, Difluoroethylen und Tetrafluoroethylen, oder auch **copolymerisierbare Antiageing Monomere**, bevorzugt N-(4-anilinophenyl) acrylamid, N-(4-anilinophenyl) methacrylamid, N-(4-anilinphenyl) cinnamide, N-(4-anilinophenyl) crotonamid, N-phenyl-4-(3-vinylbenzyloxy) anilin und N-phenyl-4-(4-vinylbenzyloxy) anilin eingesetzt werden sowie **nicht-konjugierte Diene**, wie 4-Cyanocyclohexen und 4-Vinylcyclohexen, oder auch **Alkine**, wie 1- oder 2-Butin.

Alternativ können als weitere copolymerisierbare Termonomere carboxygruppenhaltige, copolymerisierbare Termonomere eingesetzt werden, beispielsweise α,β-ungesättigte Monocarbonsäuren, deren Ester, α,β-ungesättigte Dicarbonsäuren, deren Mono- oder -Diester oder um deren entsprechenden Anhydride oder Amide.

Als **α,β-ungesättigte Monocarbonsäuren** können bevorzugt Acrylsäure und Methacrylsäure eingesetzt werden.

Einsetzbar sind auch **Ester der α,β-ungesättigten Monocarbonsäuren**, bevorzugt deren Alkylester und Alkoxyalkylester. Bevorzugt sind die Alkylester, insbesondere C₁-C₁₈ Alkylester der α,β-ungesättigten Monocarbonsäuren. Besonders bevorzugt sind Alkylester, insbesondere C₁-C₁₈ Alkylester der Acrylsäure oder der Methacrylsäure, insbesondere Methylacrylat, Ethylacrylat, Propylacrylat, n-Butylacrylat, tert.-Butylacrylat, 2-Ethylhexylacrylat, n-Dodecylacrylat, Methylmethacrylat, Ethylmethacrylat, Butylmethacrylat und 2-Ethylhexyl-methacrylat. Bevorzugt sind auch Alkoxyalkylester der α,β-ungesättigten Monocarbonsäuren, besonders bevorzugt Alkoxyalkylester der Acrylsäure oder der Methacrylsäure, insbesondere C₂-C₁₂-Alkoxyalkylester der Acrylsäure oder der Methacrylsäure, ganz besonders bevorzugt Methoxymethylacrylat, Methoxyethyl(meth)acrylat, Ethoxyethyl(meth)acrylat und Methoxymethyl-(meth)acrylat. Einsetzbar sind auch Mischungen von Alkylestern, wie z.B. den vorgenannten, mit Alkoxyalkylestern, z.B. in Form der vorgenannten. Einsetzbar sind auch Cyanoalkylacrylate and Cyanoalkylmethacrylate, in denen die C-Atom-Zahl der Cyanoalkylgruppe 2-12 beträgt, vorzugsweise α-Cyanoethylacrylat, β-Cyanoethylacrylat und Cyanobutylmethacrylat. Einsetzbar sind auch Hydroxyalkylacrylate and Hydroxyalkylmethacrylate, in denen die C-Atom-Zahl der Hydroxyalkylgruppen 1-12 beträgt, vorzugsweise 2-Hydroxyethylacrylat, 2-Hydroxyethylmethacrylat und 3-Hydroxypropylacrylat; Einseztbar sind auch Fluor-substituierte Benzylgruppenhaltige Acrylate oder Methacrylate, vorzugsweise Fluorobenzylacrylate, und Fluorobenzylmethacrylat. Einsetzbar sind auch Fluoroalkylgruppen haltige Acrylate und -Methacrylate, vorzugsweise Trifluoroethylacrylat und Tetrafluoropropylmethacrylat. Einsetzbar sind auch Aminogruppenhaltige αβ-ungesättigte Carbonsäureester wie Dimethylaminomethylacrylat und Diethylaminoethylacrylat.

Als weitere copolymerisierbare Monomere können ferner **α,β-ungesättigte Dicarbonsäuren,** bevorzugt Maleinsäure, Fumarsäure, Crotonsäure, Itaconsäure, Citraconsäure und Mesaconsäure, eingesetzt werden.

Eingesetzt werden können ferner **α,β-ungesättigte Dicarbonsäureanhydride,** bevorzugt Maleinsäureanhydrid, Itaconsäureanhydrid, Citraconsäureanhydrid und Mesaconsäureanhydrid.

Eingesetzt werden können ferner **Mono- oder Diester von α,β-ungesättigten Dicarbonsäuren**.

Bei diesen α,β-ungesättigten Dicarbonsäuremono- oder diestern kann es sich beispielsweise handeln um **Alkyl-**, bevorzugt C₁-C₁₀-Alkyl, insbesondere Ethyl-, n-Propyl-, iso-Propyl, n-Butyl-, tert.-Butyl, n-Pentyl- oder n-Hexyl-, **Alkoxyalkyl-**, bevorzugt C₂-C₁₂ Alkoxyalkyl-, besonders bevorzugt C₃-C₈- Alkoxyalkyl, **Hydroaryalkyl**, bevorzugt C₁-C₁₂ Hydroxyalkyl-, besonders bevorzugt C₂-C₈- Hydroxyalkyl, **Epoxyalkyl**, bevorzugt C₃-C₁₂ Epoxyalkyl, **Cycloalkyl**-, bevorzugt C₅-C₁₂-Cycloalkyl-, besonders bevorzugt C₆-C₁₂-Cycloalkyl, **Alkylcycloalkyl-**, bevorzugt C₆-C₁₂-Alkylcycloalkyl-, besonders bevorzugt C₇-C₁₀-Alkylcycloalkyl, **Aryl-**, bevorzugt C₆-C₁₄-Aryl-Mono- oder -Diester, wobei es sich im Fall der Diester jeweils auch um gemischte Ester handeln kann.

Besonders bevorzugte **Alkylester von α,β-ungesättigten Monocarbonsäuren** sind Methyl(meth)acrylat, Ethyl(meth)acrylat, Propyl(meth)acrylat, n-Butyl(meth)acrylat, t-Butyl(meth)acrylat, Hexyl(meth)acrylat, 2-Ethylhexyl(meth)acrylat, Octyl(meth)acrylat, 2-Propylheptylacrylat und Lauryl(meth)acrylat. Insbesondere wird n-Butylacrylat eingesetzt.

Besonders bevorzugte **Alkoxyalkylester der α,β-ungesättigten Monocarbonsäuren** sind Methoxyethyl(meth)acrylat, Ethoxyethyl(meth)acrylat und Methoxymethyl(meth)acrylat. Insbesondere wird Methoxyethylacrylat eingesetzt.

Besonders bevorzugte **Hydroxyalkylester der α,β-ungesättigten Monocarbonsäuren** sind Hydroxyethyl(meth)acrylat, Hydroxypropyl-(meth)acrylat und Hydroxybutyl(meth)acrylat.

Besonders bevorzugte **Epoxyalkylester der α,β-ungesättigten Monocarbonsäuren** sind 2-Ethylglycidylacrylat, 2-Ethylglycidylmethacrylat, 2-(n-Propyl)glycidylacrylat, 2-(n-Propyl)glycidylmethacrylat, 2-(n-Butyl)glycidylacrylat, 2-(n-Butyl)glycidylmethacrylat, Glycidylmethylacrylat, Glycidylmethyl-methacrylat, Glycidylacrylat, (3',4'-Epoxyheptyl)-2-ethylacrylat, (3',4'-Epoxyheptyl)-2-ethylmethacrylat, (6',7'-Epoxyheptyl)acrylat, (6',7'-Epoxyheptyl)methacrylat.

Als sonstige **Ester der α,β-ungesättigten Monocarbonsäuren** werden ferner beispielsweise Polyethylenglykol(meth)acrylat, Polypropylenglykol(meth)acrylat, N-(2-Hydroxyethyl)acrylamide, N-(2-Hydroxymethyl)acrylamide und Urethan(meth)acrylat eingesetzt.

Beispiele von **α,β-ungesättigten Dicarbonsäuremonoestern** umfassen
- Maleinsäuremonoalkylester, bevorzugt Monomethylmaleat, Monoethylmaleat, Monopropyl maleat und Mono-n-butylmaleat;
- Maleinsäuremonocycloalkylester, bevorzugt Monocyclopentylmaleat, Monocyclohexyl maleat und Monocycloheptylmaleat;
- Maleinsäuremonoalkylcycloalkylester, bevorzugt Monomethylcyclopentylmaleat und Monoethylcyclohexylmaleat;
- Maleinsäuremonoarylester, bevorzugt Monophenylmaleat;
- Maleinsäuremonobenzylester, bevorzugt Monobenzylmaleat;
- Fumarsäuremonoalkylester, bevorzugt Monomethylfumarat, Monoethylfumarat, Monopropyl fumarat und Mono-n-butyl fumarat;
- Fumarsäuremonocycloalkylester, bevorzugt Monocyclopentylfumarat, Monocyclohexyl fumarat und Monocycloheptylfumarat;
- Fumarsäuremonoalkylcycloalkylester, bevorzugt Monomethylcyclopentylfumarat und Monoethylcyclohexylfumarat;
- Fumarsäuremonoarylester, bevorzugt Monophenylfumarat;
- Fumarsäuremonobenzylester, bevorzugt Monobenzylfumarat;
- Citraconsäuremonoalkylester, bevorzugt Monomethylcitraconat, Monoethylcitraconat, Monopropylcitraconat und Mono-n-butyl citraconat;
- Citraconsäuremonocycloalkylester, bevorzugt Monocyclopentylcitraconat, Monocyclohexyl citraconat und Monocycloheptylcitraconat;
- Citraconsäuremonoalkylcycloalkylester, bevorzugt Monomethylcyclopentylcitraconat und Monoethylcyclohexylcitraconat;
- Citraconsäuremonoarylester, bevorzugt Monophenylcitraconat;
- Citraconsäuremonobenzylester, bevorzgut Monobenzylcitraconat;
- Itaconsäuremonoalkylester, bevorzugt Monomethylitaconat, Monoethylitaconat, Monopropyl itaconat und Mono-n-butyl itaconat;
- Itaconsäuremonocycloalkylester, bevorzugt Monocyclopentylitaconat, Monocyclohexyl itaconat und Monocycloheptylitaconat;
- Itaconsäuremonoalkylcycloalkylester, bevorzugt Monomethylcyclopentylitaconat und Monoethylcyclohexylitaconat;
- Itaconsäuremonoarylester, bevorzugt Monophenylitaconat;
- Itaconsäuremonobenzylester, bevorzugt Monobenzylitaconat.
- Mesaconsäuremonoalkylester, bevorzugt Mesaconsäuremonoethylester;

Als **α,β-ungesättigte Dicarbonsäurediester** können die analogen Diester basierend auf den zuvor genannten Monoestergruppen eingesetzt werden, wobei es sich bei den Estergruppen auch um chemisch verschiedene handeln kann.

Es ist ferner möglich, als weitere copolymerisierbare Monomere radikalisch polymerisierbare Verbindungen einzusetzen, die pro Molekül zwei oder mehr olefinische Doppelbindungen enthalten. Beispiele solcher zwei- oder mehrfach ungesättigter Verbindungen sind zwei- oder mehrfach ungesättigte Acrylate, Methacrylate oder Itaconate von Polyolen wie z.B. 1,6-Hexandioldiacrylat (HDODA), 1,6-Hexandioldimethacrylat, Ethylenglykoldiacrylat, Ethylenglykoldimethacrylat (EGDMA), Diethylenglykoldimethacrylat, Triethylenglykoldiacrylat, Butandiol-1,4-diacrylat, Propandiol-1,2-diacrylat, Butandiol-1,3-dimethacrylat, Neopentylglykoldiacrylat, Trimethylolpropandiacrylat, Trimethylolpropandimethacrylat, Trimethylolethandiacrylat, Trimethylolethandimethacrylat, Trimethylolpropantriacrylat, Trimethylolpropantrimethacrylat (TMPTMA), Glycerindi- und -triacrylat, Pentaerythritdi-, -tri-und tetraacrylat oder -methacrylat, Dipentaerythrittetra, -penta- und -hexaacrylat oder -methacrylat oder -itaconat, Sorbittetraacrylat, Sorbithexamethacrylat, Diacrylate oder Dimethacrylate von 1,4-Cyclohexandiol, 1,4-Dimethylolcyclohexan, 2,2-Bis(4-hydroxyphenyl)propan, von Polyethylenglykolen oder von Oligoestern oder Oligourethanen mit endständigen Hydroxylgruppen. Als mehrfach ungesättigte Monomere können auch Acrylamide verwendet werden wie z.B. Methylenbisacrylamid, Hexamethylen-1,6-bisacrylamid, Diethylentriamin-tris-methacrylamid, Bis(methacrylamido-propoxy)ethan oder 2-Acrylamido-ethylacrylat. Beispiele für mehrfach ungesättigte Vinyl- und Allylverbindungen sind Divinylbenzol, Ethylenglykoldivinylether, Diallylphthalat, Allylmethacrylat, Diallylmaleat, Triallylisocyanurat oder Triallylphosphat.

Bei Einsatz derartiger Termonomere gelingt es vorteilhafterweise, die Polymerisation bis zu hohen Umsätzen zu führen und dabei Nitrilkautschuke herzustellen, die ein vergleichsweise höheres mittleres Molekulargewicht Mw (Gewichtsmittel) bzw. Mn (Zahlenmittel) aufweisen, jedoch trotzdem gelfrei sind.

Die Anteile an konjugiertem Dien und α,β-ungesättigtem Nitril in den erhaltenen NBR-Polymeren können in weiten Bereichen schwanken. Der Anteil des oder der Summe der konjugierten Diene liegt üblicherweise im Bereich von 40 bis 90 Gew.-%, bevorzugt im Bereich von 50 bis 85 Gew. %, bezogen auf das Gesamtpolymer. Der Anteil des oder der Summe der α,β-ungesättigten Nitrile liegt üblicherweise bei 10 bis 60 Gew.-%, bevorzugt bei 15 bis 50 Gew.-%, bezogen auf das Gesamtpolymer. Die Anteile der Monomere summieren sich jeweils zu 100 Gew.-% auf. Die zusätzlichen Monomere können je nach Art des/der Termonomere in Mengen von 0 bis 40 Gew.%, bezogen auf das Gesamtpolymer, vorliegen. In diesem Fall werden entsprechende Anteile des oder der konjugierten Diene und/oder des oder der α,β-ungesättigten Nitrile durch die Anteile der zusätzlichen Monomere ersetzt, wobei sich die Anteile aller Monomere jeweils zu 100 Gew.% aufsummieren.

Soweit es sich bei den Termonomeren um solche Monomere handelt, die tertiäre Radikale bilden (z.B. Methacrylsäure), hat es sich bewährt, diese in Mengen von 0 bis 10 Gew.% einzusetzen.

Es ist anzumerken, dass die zuvor genannte Begrenzung der zusätzlichen Monomere auf max. 40% nur für die Konstellation gilt, dass die Gesamtmenge an Monomeren dem Polymerisationsansatz zu Beginn bzw. während der Reaktion zudosiert werden (also zur Erzeugung statistischer Terpolymersysteme). Bei Ausführungsvariante (2) ist es natürlich möglich, einen erfindungsgemäß hergestellten optional hydrierten Nitrilkautschuk aufgrund der Tatsache, dass er in der Polymerhauptkette und/oder den Endgruppen Fragmente des oder der eingesetzten Regler aufweist, als Makro-Regler einzusetzen und durch Umsatz mit geeigneten Monomere in beliebiger Menge z.B. zur Generierung von Block-Systemen einzusetzen.

Die **Glastemperaturen** der optional hydrierten Nitrilkautschuke liegen im Bereich von -70°C bis +20°C, vorzugsweise im Bereich -60°C bis 10°.

Mittels des erfindungsgemäßen Verfahrens können Nitrilkautschuke mit einem Polydispersitätsindex im Bereich von 1,1 bis 6,0, bevorzugt in einem Bereich von 1,3 bis 5,0, besonders bevorzugt in einem Bereich von 1,4 bis 4,5 hergestellt werden. Im Fall von Ausführungsvariante (2) ist es aufgrund des lebenden Charakters der Polymerisation möglich, Nitrilkautschuke mit einer engen Molekulargewichtsverteilung zu erhalten. Hergestellt werden können dann Nitrilkautschuke mit einem Polydispersitätsindex im Bereich von 1,1 bis 2,5, bevorzugt in einem Bereich von 1,3 bis 2,4, besonders bevorzugt in einem Bereich von 1,4 bis 2,2, insbesondere in einem Bereich von 1,5 bis 2,0, ganz besonders bevorzugt in einem Bereich von 1,5 bis kleiner 2.

Insbesondere bei Ausführungsvariante (2) erlaubt das erfindungsgemäße Verfahren durch Steuerung der Reglerkonzentration eine sehr genaue Einstellung des gewünschten Molekulargewichts und darüber hinaus durch Einsatz der Regler auch den Aufbau gezielter Polymer-Architekturen (z.B. Herstellung von Blöcken, Graften auf Polymerbackbones, Oberflächenanbindung, der Einsatz von Termonomeren mit mehr als einer C=C Doppelbindung, sowie weitere dem Fachmann bekannten Polymermodifikationen) sowie gezielter Molekulargewichtsverteilungen von extrem engen bis hin zu breiten Verteilungen, von mono- über bi- bis hin zu multimodalen Verteilungen. Die über diese Methoden gezielt aufgebauten Nitrilkautschuke können einen Polydispersitätsindex PDI = Mw/Mn, wobei Mw das Gewichtsmittel und Mn das Zahlenmittel des Molekulargewichts darstellt, im Bereich von 1,1 bis 8,0, bevorzugt im Bereich von 1,15 bis 7,0, besonders bevorzugt im Bereich von 1,2 bis 6,0 und insbesondere im Bereich von 1,3 bis 5,0 besitzen.

### Hydrierung:

Optional schließt sich an die radikalische Polymerisation des erfindungsgemäßen Verfahrens eine Hydrierung des Nitrilkautschuks zu ganz oder teilweise hydriertem Nitrilkautschuk an.

Ein weiterer Gegenstand der vorliegenden Erfindung besteht in der Bereitstellung von hydrierten Nitrilkautschuken, indem sich an den ersten Polymerisationsschritt a) unmittelbar die Hydrierung b) anschließt, wobei keine vorhergehende Isolierung des Nitrilkautschuks nötig ist wie bei der bisher im Stand der Technik eingesetzen NBR Emulsionspolymerisation. Die Hydrierung kann unmittelbar im Anschluss an die Polymerisation, sofern gewünscht sogar im gleichen Reaktor durchgeführt werden. Dies führt zu einer substantiellen Vereinfachung und damit zu wirtschaftlichen Vorteilen bei der Herstellung des HNBR.

Die Hydrierung kann unter Einsatz homogener oder heterogener Hydrierkatalysatoren durchgeführt werden. Die eingesetzten Katalysatoren basieren üblicherweise auf Rhodium, Ruthenium oder Titan, es können aber auch Platin, Iridium, Palladium, Rhenium, Ruthenium, Osmium, Kobalt oder Kupfer entweder als Metall, oder aber bevorzugt in Form von Metallverbindungen eingesetzt werden (siehe z.B.US-A-3,700,637**,** DE-A-25 39 132**,** EP-A- 0 134 023**,** DE-OS- 35 41 689**,** DE-OS- 35 40 918**,** EP-A-0 298 386**,** DE-OS- 35 29 252**,** DE-OS- 34 33 392**,** US-A-4,464,515 **und** US-A-4,503,196).

Geeignete Katalysatoren und Lösungsmittel für eine Hydrierung in homogener Phase werden im Folgenden beschrieben und sind auch aus DE-A-25 39 132 und der EP-A-0 471 250 bekannt

Die selektive Hydrierung kann beispielsweise in Gegenwart eines Rhodium- oder Rutheniumhaltigen Katalysators erreicht werden. Einsetzbar ist beispielsweise ein Katalysator der allgemeinen Formel

(R¹ₘB)₁ M Xₙ,

worin M Ruthenium oder Rhodium ist, R¹ gleich oder verschieden sind und eine C₁-C₈ Alkylgruppe, eine C₄-C₈ Cycloalkylgruppe, eine C₆-C₁₅ Aryl-Gruppe oder eine C₇-C₁₅ Aralkylgruppe darstellen. B ist Phosphor, Arsen, Schwefel oder eine Sulfoxid-Gruppe S=O, X ist Wasserstoff oder ein Anion, vorzugsweise Halogen und besonders bevorzugt Chlor oder Brom, 1 ist 2,3 oder 4, m ist 2 oder 3 und n ist 1,2 oder 3, bevorzugt 1 oder 3. Bevorzugte Katalysatoren sind Tris(triphenylphosphin)-rhodium(**I**)-chlorid, Tris(triphenylphosphin)-rhodium(III)-chlorid und Tris(dimethylsulfoxid)-rhodium(III)-chlorid sowie Tetrakis(triphenylphosphin)-rhodium-hydrid der Formel (C₆H₅)₃P)₄RhH und die entsprechenden Verbindungen, in denen das Triphenylphosphin ganz oder teilweise durch Tricyclohexylphosphin ersetzt wurde. Der Katalysator kann in kleinen Mengen benutzt werden. Eine Menge im Bereich von 0,01-1 Gew.%, bevorzugt im Bereich von 0,03-0,5 Gew.% und besonders bevorzugt im Bereich von 0,1-0,3 Gew.% bezogen auf das Gewicht des Polymers sind geeignet.

Üblicherweise ist es sinnvoll, den Katalysator zusammen mit einem Co-Katalysator zu verwenden, der ein Ligand der Formel R¹ₘB ist, wobei R¹, m und B die zuvor für den Katalysator genannten Bedeutungen besitzen. Bevorzugt ist m gleich 3, B gleich Phosphor und die Reste R¹ können gleich oder verschieden sein. Bevorzugt handelt es sich um Co-Katalysatoren mit Trialkyl, Tricycloalkyl, Triaryl, Triaralkyl, Diaryl-monoalkyl, Diaryl-monocycloalkyl, Dialkyl-monoaryl, Dialkyl-monocycloalkyl, Dicycloalkyl-monoaryl oder Dicyclalkyl-monoaryl-Resten.

Beispiele von Co-Katalysatoren finden sich beispielsweise in US-A-4,631,315. Bevorzugter Co-Katalysator ist Triphenylphosphin. Der Co-Katalysator wird bevorzugt in Mengen in einem Bereich von 0,3-5 Gew.%, bevorzugt im Bereich von 0,5-4 Gew.% eingesetzt, bezogen auf das Gewicht des zu hydrierenden Nitrilkautschuks. Bevorzugt liegt ferner das Gewichtsverhältnis des Rhodium-haltigen Katalysators zum Co-Katalysator im Bereich von 1:3 bis 1:55, besonders bevorzugt im Bereich von 1:5 bis 1:45. Bezogen auf 100 Gewichtsteile des zu hydrierenden Nitrilkautschuks werden geeigneterweise 0,1 bis 33 Gewichtsteile des Co-Katalyators, bevorzugt 0,5 bis 20 und ganz besonders bevorzugt 1 bis 5 Gewichtsteile, insbesondere mehr als 2 aber weniger als 5 Gewichtsteile Co-Katalysator bezogen auf 100 Gewichtsteile des zu hydrierenden Nitrilkautschuks eingesetzt.

Die praktische Durchführung dieser Hydrierung ist dem Fachmann aus US-A-6,683,136 hinlänglich bekannt. Sie erfolgt üblicherweise, indem man den zu hydrierenden Nitrilkautschuk in einem Lösungsmittel wie Toluol oder Monochlorbenzol bei einer Temperatur im Bereich von 100 bis 150 °C und einem Druck im Bereich von 50 bis 150 bar für 2 bis 10 h mit Wasserstoff beaufschlagt.

Unter Hydrierung wird im Rahmen dieser Erfindung eine Umsetzung der im Ausgangs-Nitrilkautschuk vorhandenen Doppelbindungen zu mindestens 50 %, bevorzugt 70-100%, besonders bevorzugt 80-100% und insbesondere 90 bis 100%, verstanden.

Bei Einsatz heterogener Katalysatoren handelt es sich üblicherweise um geträgerte Katalysatoren auf der Basis von Palladium, die z. B. auf Kohle, Kieselsäure, Calciumcarbonat oder Bariumsulfat geträgert sind.

Insbesondere bei Ausführungvariante (2) des erfindungsgemäßen Verfahrens ist es aufgrund der guten Möglichkeit, durch den RAFT Regler das Molekulargewicht des entstehenden Polymers zu steuern, möglich, NBR-Typen (und entsprechend bei nachgelagerter zusätzlicher Hydrierung auch HNBR-Typen) mit niedrigem Molekulargewicht und niedriger Mooney Viskosität herzustellen, ohne dass es im Fall des HNBR vor der Hydrierung zwingend eines gezielten Abbaus des Molekulargewichts (z.B. durch Mastikation, chemischen Abbau oder Metathese) in einem weiteren Verfahrensschritt bedarf. Sofern gewünscht, kann natürlich ein solcher zusätzlicher Molekulargewichtsabbau erfolgen, insbesondere durch die dem Fachmann beispielsweise aus der WO-A-02/100941 sowie der WO-A-02/100905 bekannte Metathese.

Auf Grundlage der über das erfindungsgemäße Verfahren erhaltenen Nitrilkautschuken bzw. der entsprechenden optional hydrierten Nitrilkautschuke lassen sich ferner vulkanisierbare Mischungen enthaltend den optional hydrierten Nitrilkautschuk, mindestens einen Vernetzer und optional mindestens einen Füllstoff herstellen.

Optional können derartige vulkanisierbare Mischungen auch noch ein oder mehrere dem Fachmann für Kautschuke geläufige Additive enthalten. Diese umfassen Alterungsschutzmittel, Reversionsschutzmittel, Lichtschutzmittel, Ozonschutzmittel, Verarbeitungshilfsmittel, Weichmacher, Mineralöle, Tackifier, Treibmittel, Farbstoffe, Pigmente, Wachse, Harze, Streckmittel, organische Säuren, Vulkanisationsverzögerer, Metalloxide, sowie weitere Füllstoffaktivatoren, wie beispielsweise Triethanolamin, Trimethylolpropan, Polyethylenglykol, Hexantriol, aliphatische Trialkoxysilane oder anderen Additive, die in der Gummiindustrie bekannt sind (Ullmann's Encyclopedia of Industrial Chemistry, VCH Verlagsgesellschaft mbH, D-69451 Weinheim, 1993, vol A 23 "Chemicals and Additives", S. 366-417).

Als **Vernetzer** kommen beispielsweise peroxidische Vernetzer in Frage wie Bis(2,4-dichlorbenzyl)peroxid, Dibenzoylperoxid, Bis(4-chlorbenzoyl)peroxid, 1,1-Bis-(t-butylperoxy)-3,3,5-trimethylcyclohexan, tert-Butylperbenzoat, 2,2 Bis(t-butylperoxy) buten, 4,4-di-tert.Butyl peroxynonylvalerat, Dicumylperoxid, 2,5-Dimethyl-2,5-di(t-butylperoxy)-hexan, tert-Butylcumylperoxid, 1,3-Bis(t-butylperoxy isopropyl)-benzol, Di-t-butylperoxid und 2,5-Dimethyl-2,5-di(t-butylperoxy)-hexyn-3.

Es kann vorteilhaft sein, neben diesen peroxidischen Vernetzern noch weitere Zusätze zu verwenden, mit deren Hilfe die Vernetzungsausbeute erhöht werden kann: Hierfür sind beispielsweise Triallylisocyanurat, Triallylcyanurat, Trimethylolpropan-tri(meth)acrylat, Triallyltrimellithat, Ethylenglycoldimethacrylat, Butandioldimethacrylat, Trimethylolpropantrimethacrylat, Zinkacrylat, Zinkdiacrylat, Zinkmethacrylat, Zinkdimethacrylat, 1,2-Polybutadien oder N,N'-m-phenylen-dimaleinimid geeignet.

Die Gesamtmenge des oder der Vernetzer liegt üblicherweise im Bereich von 1 bis 20 phr, bevorzugt im Bereich von 1,5 bis 15 phr und besonders bevorzugt im Bereich von 2 bis 10 phr, bezogen auf den optional hydrierten Nitrilkautschuk.

Als Vernetzer können auch Schwefel in elementarer löslicher oder unlöslicher Form oder Schwefelspender eingesetzt werden.

Als Schwefelspender kommen beispielsweise Dimorpholyldisulfid (DTDM), 2-Morpholinodithiobenzothiazol (MBSS), Caprolactamdisulfid, Dipentamethylenthiuramtetrasulfid (DPTT), und Tetramethylthiuramdisulfid (TMTD) in Frage.

Auch bei der Schwefelvulkanisation der erfindungsgemäßen Nitrilkautschuke ist es möglich, noch weitere Zusätze zu verwenden, mit deren Hilfe die Vernetzungsausbeute erhöht werden kann. Grundsätzlich kann die Vernetzung aber auch mit Schwefel oder Schwefelspendern allein erfolgen.

Umgekehrt kann die Vernetzung der erfindungsgemäßen optional hydrierten Nitrilkautschuk aber auch nur in Gegenwart der oben genannten Zusätze erfolgen, d.h. ohne Zusatz von elementarem Schwefel oder Schwefelspendern.

Als Zusätze, mit deren Hilfe die Vernetzungsausbeute erhöht werden kann, eignen sich z.B. Dithiocarbamate, Thiurame, Thiazole, Sulfenamide, Xanthogenate, Guanidinderivate, Caprolactame und Thioharnstoffderivate.

Als Dithiocarbamate können beispielsweise eingesetzt werden: Ammoniumdimethyldithiocarbamat, Natriumdiethyldithiocarbamat (SDEC), Natriumdibutyl-dithiocarbamat (SDBC), Zinkdimethyldithiocarbamat (ZDMC), Zinkdiethyldithiocarbamat (ZDEC), Zinkdibutyldithiocarbamat (ZDBC), Zinkethylphenyldithiocarbamat (ZEPC), Zinkdibenzyldithiocarbamat (ZBEC), Zinkpentamethylendithiocarbamat (Z5MC), Tellurdiethyldithio-carbamat, Nickeldibutyldithiocarbamat, Nickeldimethyldithiocarbamat und Zinkdiisononyldithio-carbamat.

Als Thiurame können zum Beispiel eingesetzt werden: Tetramethylthiuramdisulfid (TMTD), Tetramethylthiurammonosulfid (TMTM), Dimethyldiphenylthiuramdisulfid, Tetrabenzylthiuramdisulfid, Dipentamethylenthiuramtetrasulfid und Tetraethylthiuramdisulfid (TETD),

Als Thiazole können zum Beispiel eingesetzt werden: 2-Mercaptobenzothiazol (MBT), Dibenzthiazyldisulfid (MBTS), Zinkmercaptobenzothiazol (ZMBT) und Kupfer-2-mercaptobenzo-thiazol.

Als Sulfenamidderivate können zum Beispiel eingesetzt werden: N-Cyclohexyl-2-benzothiazylsulfenamid (CBS), N-tert.-Butyl-2-benzthiazylsulfenamid (TBBS), N,N'-Dicyclohexyl-2-benzthiazylsulfenamid (DCBS), 2-Morpholinothiobenzthiazol (MBS), N-Oxydiethylenthiocarbamyl-N-tert.butylsulfenamid und Oxydiethylenthiocarbamyl-N-oxyethylensulfenamid.

Als Xanthogenate können zum Beispiel eingesetzt werden: Natriumdibutylxanthogenat, Zinkisopropyldibutylxanthogenat und Zinkdibutylxanthogenat.

Als Guanidinderivate können zum Beispiel eingesetzt werden: Diphenylguanidin (DPG), Di-o-tolylguanidin (DOTG) und o-Tolylbiguanid (OTBG).

Als Dithiophosphate können beispielsweise eingesetzt werden: Zinkdialkydithiophosphate (Kettenlänge der Alkylreste C2 bis C16), Kupferdialkyldithiophosphate (Kettenlänge der Alkylreste C₂ bis C₁₆) und Dithiophoshorylpolysulfid.

Als Caprolactam kann beispielsweise Dithio-bis-caprolactam eingesetzt werden.

Als Thioharnstoffderivate können beispielsweise N,N'-Diphenylthioharnstoff (DPTU), Diethylthioharnstoff (DETU) und Ethylenthioharnstoff (ETU) eingesetzt werden.

Ebenso als Zusätze geeignet sind beispielsweise: Zinkdiamindiisocyanat, Hexamethylentetramin, 1,3-Bis(citraconimidomethyl)benzol sowie zyklische Disulfane.

Die genannten Zusätze als auch die Vernetzungsmittel können sowohl einzeln als auch in Mischungen eingesetzt werden. Bevorzugt werden folgende Substanzen für die Vernetzung der Nitrilkautschuke eingesetzt: Schwefel, 2-Mercaptobenzthiazol, Tetramethylthiuramdisulfid, Tetramethylthiurammonosulfid, Zinkdibenzyldithiocarbamat, Dipentamethylenthiuramtetrasulfid, Zinkdialkydithiophosphat, Dimorpholyldisulfid, Tellurdiethyldithiocarbamat, Nickeldibutyldithiocarbamat, Zinkdibutyldithiocarbamat, Zinkdimethyldithiocarbamat und Dithiobiscaprolactam.

Die Vernetzungsmittel und zuvor genannten Zusätze können jeweils in Mengen von ca. 0,05 bis 10 phr, vorzugsweise 0,1 bis 8 phr, insbesondere 0,5 bis 5 phr (Einzeldosierung, jeweils bezogen auf die Wirksubstanz) bezogen auf den optional hydrierten Nitrilkautschuk eingesetzt werden.

Bei der erfindungsgemäßen Schwefelvernetzung ist es gegebenenfalls auch sinnvoll, zusätzlich zu den Vernetzungsmitteln und oben genannten Zusätzen auch weitere anorganische bzw. organische Substanzen mit zu verwenden, beispielsweise: Zinkoxid, Zinkcarbonat, Bleioxid, Magnesiumoxid, Calciumoxid, gesättigte oder ungesättigte organische Fettsäuren und deren Zinksalze, Polyalkohole, Aminoalkohole, wie zum Beispiel Triethanolamin sowie Amine wie zum Beispiel Dibutylamin, Dicyclohexylamin, Cyclohexylethylamin und Polyetheramine.

Sofern es sich bei den erfindungsgemäßen optional hydrierten Nitrilkautschuken um solche handeln, die Wiederholungseinheiten eines oder mehrerer carboxygruppenhaltiger Termonomere beinhalten, so kann ein Vernetzung auch über den Einsatz eines Polyamin-Vernetzers erfolgen, bevorzugt in Gegenwart eines Vernetzungsbeschleunigers. Der Polyamin-Vernetzer ist nicht eingeschränkt, solange es sich (1) um eine Verbindung handelt, die entweder zwei oder mehr Amino-Gruppen enthält (ggf. auch in Salz-Form) oder (2) um eine Spezies, die während der Vernetzungsreaktion in-situ eine Verbindung ausbildet, die zwei oder mehr Amino-Gruppen ausbildet. Bevorzugt wird eine aliphatische oder aromatische Kohlenwasserstoffverbindung eingesetzt bei der mindestens zwei Wasserstoffatome entweder durch Aminogruppen ersetzt sind oder aber durch Hydrazid-Strukturen (letzteres eine Struktur "-C(=O)NHNH₂")

Beispiele für derartige Polyamin-Vernetzer (ii) sind:
- Aliphatische Polyamine, bevorzugt Hexamethylendiamin, Hexamethylendiamincarbamat, Tetramethylenpentamin, Hexamethylendiaminzimtaldehyd-Addukt oder Hexamethylendiamindibenzoat;
- Aromatische Polyamine, bevorzugt 2,2-Bis(4-(4-aminophenoxy)phenyl) propan, 4,4'-Methylendianilin, m-Phenylendiamin, p-Phenylendiamin oder 4,4'-Methylen-bis(o-chloroanilin;
- Verbindungen mit mindestens zwei Hydrazid-Strukturen, bevorzugt Isophthalsäure dihydrazid, Adipinsäuredihydrazid oder Sebacinsäuredihydrazid.

Besonders bevorzugt sind Hexamethylendiamin und Hexamethylendiamincarbamat.

Die Menge des Polyamin-Vernetzeres in der vulkanisierbaren Mischung liegt üblicher Weise im Bereich von 0,2 bis 20 Gew.-Teile, bevorzugt im Bereich von 1 bis 15 Gew.-Teile und besonders bevorzugt im Bereich von 1,5 bis 10 Gew.-Teile bezogen auf 100 Gew.-Teile des optional hydrierten Nitrilkautschuks.

Als Vernetzungsbeschleuniger kann in Kombination mit dem Polyamin-Vernetzer jeder dem Fachmann bekannte eingesetzt werden, bevorzugt ein basischer Vernetzungsbeschleuniger. Einsetzbar sind z.B. Tetramethylguanidin, Tetraethylguanidin, Diphenylguanidin, Di-o-tolylguanidin (DOTG), o-Tolylbiguanidin und Di-o-tolylguanidin-Salz der Dicathecolborsäure. Einsetzbar sind ferner Aldehydeamin-Vernetzungsbeschleuniger wie z.B. n-Butylaldehydanilin. Besonders bevorzugt wir als Vernetzungsbeschleuniger mindestens eine bi- oder polycyclische aminische Base. Diese sind dem Fachmann bekannt. Insbesondere geeignet sind 1,8-diazabicyclo[5.4.0]undec-7-en (DBU), 1,5-diazabicyclo[4.3.0]-5-nonen (DBN), 1,4-diazabicyclo[2.2.2]octan (DABCO), 1,5,7-triazabicyclo[4.4.0]dec-5-en (TBD), 7-methyl-1,5,7-triazabicyclo[4.4.0]dec-5-en (MTBD).

Die Menge des Vernetzungsbeschleunigers liegt in diesem Fall üblicher Weise in einem Bereich von 0,5 bis 10 Gew.-Teile, bevorzugt 1 bis 7,5 Gew.-Teile, insbesondere 2 bis 5 Gew.-Teile, bezogen auf 100 Gew.-Teile des optional hydrierten Nitrilkautschuks.

Die vulkanisierbare Mischung basierend auf dem erfindungsgemäßen optional hydrierten Nitrilkautschuk kann prinzipiell auch Anvulkanisationsverzögerer enthalten. Hierzu gehören Cyclohexylthiophthalimid (CTP), N,N' Dinitrosopentamethlyentetramin (DNPT), Phthalsäureanhydrid (PTA) und Diphenylnitrosamin. Bevorzugt ist Cyclohexylthiophthalimid (CTP).

Neben der Zugabe des oder der Vernetzer kann der erfindungsgemäße optional hydrierten Nitrilkautschuk auch mit weiteren üblichen Kautschukadditiven gemischt werden.

Als **Füllstoffe** können z.B. Ruß, Kieselsäure, Bariumsulfat, Titandioxid, Zinkoxid, Calciumoxid, Calciumcarbonat, Magnesiumoxid, Aluminiumoxid, Eisenoxid, Aluminiumhydroxid, Magnesiumhydroxid, Aluminiumsilikate, Diatomeenerde, Talkum, Kaoline, Bentonite, Kohlenstoff Nanotubes, Teflon (letzteres bevorzugt in Pulverform) oder Silikate eingesetzt werden.

Als **Füllstoffaktivatoren** kommen insbesondere organische Silane, wie beispielsweise Vinyltrimethyloxysilan, Vinyldimethoxymethylsilan, Vinyltriethoxysilan, Vinyltris(2-methoxy-ethoxy)silan, N-Cyclohexyl-3-aminopropyltrimethoxysilan, 3-Aminopropyl-trimethoxysilan, Methyltrimethoxysilan, Methyltlriethoxysilan, Dimethyldimethoxysilan, Dimethyldiethoxysilan, Trimethylethoxysilan, Isooctyltrimethoxysilan, Isooctyltriethoxysilan, Hexadecyltrimethoxysilan oder (Octadecyl)methyldimethoxysilan in Betracht. Weitere Füllstoffaktivatoren stellen zum Beispiel grenzflächenaktive Substanzen wie Triethanolamin und Ethylenglycole mit Molekulargewichten von 74 bis 10 000 g/mol dar. Die Menge an Füllstoffaktivatoren beträgt üblicherweise 0 bis 10 phr, bezogen auf 100 phr des optional hydrierten Nitrilkautschuks.

Als **Alterungsschutzmittel** können den vulkanisierbaren Mischungen aus der Literatur bekannte Alterungsschutzmittel zugesetzt werden. Sie werden üblicherweise in Mengen von ca. 0 bis 5 phr, bevorzugt 0,5 bis 3 phr, bezogen auf 100 phr des optional hydrierten Nitrilkautschuks eingesetzt. Geeignete phenolische Alterungsschutzmittel sind alkylierte Phenole, styrolisiertes Phenol, sterisch gehinderte Phenole wie 2,6-Di-tert.-Butylphenol, 2,6-Di-*tert*-Butyl-*p*-Kresol (BHT), 2,6-Di-tert.-Butyl-4-Ethylphenol, estergruppenhaltige sterisch gehinderte Phenole, thioetherhaltige sterisch gehinderte Phenole, 2,2'-Methylen-bis-(4-Methyl-6-*tert*-Butylphenol) (BPH) sowie sterisch gehinderte Thiobisphenole.

Falls eine Verfärbung des Nitrilkautschuks ohne Bedeutung ist, werden auch aminische Alterungsschutzmittel z. B. Mischungen aus Diaryl-p-phenylendiaminen (DTPD), octyliertes Diphenylamin (ODPA), Phenyl-α-Naphthylamin (PAN), Phenyl-i-Naphthylamin (PBN), vorzugsweise solche auf Phenylendiaminbasis eingesetzt. Beispiele für Phenylendiamine sind *N-*Isopropyl-*N'*-phenyl-*p*-Phenylendiamin, *N*-1,3-Dimethylbutyl-*N'*-Phenyl-*p*-Phenylendiamin (6PPD), *N*-1,4-Dimethylpentyl-*N'*-phenyl-*p*-Phenylendiamin (7PPD) und *N,N*'-bis-1,4-(1,4-Dimethylpentyl)-*p*-Phenylendiamin (77PD).

Zu den sonstigen Alterungsschutzmitteln gehören Phosphite wie Tris-(nonylphenyl)phosphit, polymerisiertes 2,2,4-Trimethyl-1,2-dihydrochinolin (TMQ), 2-Mercaptobenzimidazol (MBI), Methyl-2-Mercaptobenzimidazol (MMBI), Zinkmethylmercaptobenzimidazol (ZMMBI). Die Phosphite werden im allgemeinen in Kombination mit phenolischen Alterungsschutzmitteln eingesetzt. TMQ, MBI und MMBI werden vor allem dann verwendet, wenn peroxidisch vulkanisiert wird.

Als **Formtrennmittel** kommen beispielsweise in Betracht: Gesättigte und teilweise ungesättigte Fett- und Ölsäuren und deren Derivate (Fettsäureester, Fettsäuresalze, Fettalkohole, Fettsäureamide), die vorzugsweise als Mischungsbestandteil Verwendung finden, weiterhin auf die Formoberfläche applizierbare Produkte, wie beispielsweise Produkte auf Basis von niedermolekularen Silikonverbindungen, Produkte auf Basis von Fluorpolymeren sowie Produkte auf Basis von Phenolharzen.

Die Formtrennmittel werden als Mischungsbestandteil in Mengen von ca. 0 bis 10 phr, bevorzugt 0,5 bis 5 phr, bezogen auf 100 phr des optional hydrierten Nitrilkautschuks eingesetzt.

Auch die Verstärkung mit Festigkeitsträgern (Fasern) aus Glas, nach der Lehre von US-A-4,826,721 ist möglich sowie die Verstärkung durch Corde, Gewebe, Fasern aus aliphatischen und aromatischen Polyamiden (Nylon®, Aramid®), Polyestern und Naturfaserprodukten.

Aus den vorgenannten vulkanisierbaren Mischungen können im nächsten Schritt Vulkanisate hergestellt werden, indem man die vulkanisierbare Mischung einer Vernetzung unterzieht. Die Vernetzung wird typischerweise entweder durch mindestens einen Vernetzer oder aber durch photochemische Aktivierung herbeigeführt.

Im Fall der **photochemisch aktivierten Vulkanisation** können als UV-Aktivatoren die dem Fachmann üblicherweise bekannten eingesetzt werden, beispielsweise Benzophenon, 2-Methylbenzophenon, 3,4-Dimethylbenzophenon, 3-Methylbenzophenon, 4,4'-Bis(diethylamino)benzophenon, 4,4'-Di-hydroxybenzophenon, 4,4'-Bis[2-(1-propenyl)phenoxy]benzophenon, 4-(Diethylamino) benzophenon, 4-(Dimethylamino)benzophenon, 4-Benzoylbiphenyl, 4-Hydroxybenzo-phenon, 4-Methylbenzophenon, Benzophenon-3,3',4,4'-tetracarboxyldianhydrid, 4,4'-Bis(dimethylamino) benzophenon, Acetophenon, 1-Hydroxycyclohexylphenylketon, 2,2-Diethoxyacetophenon, 2,2-Dimethoxy-2-phenylacetophenon, 2-Benzyl-2-(dimethylamino)-4'-morpholino-butyrophenon, 2-Hydroxy-2-methylpropiophenon, 2-Hydroxy-4'-(2-hydroxyethoxy)-2-methylpropiophenon, 3'-Hydroxyacetophenon, 4'-Ethoxyacetophenon, 4'-Hydroxyacetophenon, 4'-Phenoxyacetophenon, 4'-*tert*-Butyl-2',6'-dimethylacetophenon, 2-Methyl-4'-(methylthio)-2-morpholinopropiophenon, Diphenyl-(2,4,6-trimethylbenzoyl)-phosphinoxid, Phenylbis(2,4,6-trimethylbenzoyl)phosphinoxid, Methylbenzoylformat, Benzoin, 4,4'-Dimethoxybenzoin, Benzoinmethylether, Benzoinethylether, Benzoinisopropylether, Benzoinisobutylether, 4,4'-Dimethylbenzil, Hexachlorocyclopentadiene oder Kombinationen daraus.

Üblicherweise erfolgt die Vulkanisation im Rahmen eines formgebenden Verfahrens, bevorzugt unter Anwendung eines Spritzgussverfahrens.

**Gegenstand der Erfindung** ist somit ebenso das spezielle Formteil, welches erhältlich ist durch das vorgenannte Vulkanisationsverfahren. Es ist möglich, eine Vielzahl von Formteilen herzustellen, wie z.B. Dichtungen, Kappen, Schläuche oder Membranen. Herstellbar sind z.B. O-Ringdichtungen, Flachdichtungen, Wellendichtringe, Dichtmanschetten, Dichtkappen, Staubschutzkappen, Steckerdichtungen, Thermoisolierschläuche (mit und ohne PVC-Zusatz), Ölkühlerschläuche, Luftansaugschläuche, Servolenkschläuche oder Pumpenmembranen.

### BEISPIELE:

Im Rahmen der folgenden Beispiele konnte gezeigt werden, dass die Verwendung von Lösungsmittelgemischen im Vergleich zu reinen Lösungsmitteln eine Steigerung des Umsatzes ohne Einbußen des Molekulargewichtes in definierten Zeiten zur Folge haben. Die Umsätze der Polymersiationen wurden gravimetrisch festgestellt.

Die zur Synthese eingesetzten Chemikalien verfügen über die im folgenden beschriebenen Reinheiten:

Acrylnitril (+99%, Acros) und 1,3-Butadien (> 99.5%, Air Liquide), 2,2'-azobis(N-butyl-2-methylpropionamid) (Vam 110, Wako Pure Chemical Industries Ltd) wurden wie erhalten eingesetzt. Der Molekulargewichtsregler *tert*-Dodecylmercaptan stammte von der Lanxess Deutschland GmbH. 1,4-Dioxan, (> 99.8%) und Toluol (> 99.8%) wurden von VWR erhalten. *N,N*-Dimethylacetamid (DMAc, >99.5%), Monochlorobenzol (> 99%) und Acetonitril (> 99%) wurden von Acros Organics erhalten. *tert*-Butanol (99%) stammte von ABCR. Die verwendeten Lösungsmittel wurden direkt ohne weitere Aufreinigung eingesetzt.

Die in den Tabellen aufgeführten Chemikalien, wenn nicht anders vermerkt, wurden über den Chemikalienhandel bzw. aus den Produktionsanlagen der Anmelder bezogen. Der eingesetzter Regler "DoPAT" (Dodecylpropansaeuretrithiocarbonat wie in der nachfolgenden Formel dargestellt) wurde im Labor nach dem in Macromolecules (2005), 38 (6), 2191-2204 beschriebenen Herstellungsverfahren synthetisiert.

### Molekulargewichte sowie Polydispersitätsindex:

Die Bestimmung der Molekulargewichte in Form des Zahlenmittels des Molekulargewichts (Mₙ) und des Gewichtsmittels des Molekulargewichts (M_{w}) sowie des Polydispersitätsindex erfolgte mittels Gelpermeations-Chromatographie (GPC) nach DIN 55672-1 (Teil 1: Tetrahydrofuran THF als Lösungsmittel).

### Beispiel 1-13 (erfindungsgemäß und Vergleichsbeispiele):

### Herstellung von Nitrilkautschuken ("NBR") in verschiedenen organischen Lösungsmitteln und Gemischen von organischen Lösemitteln mit unterschiedlichen Verhältnissen

Die Herstellung der in den folgenden Beispielserien eingesetzten Nitrilkautschuke NBR #**1** bis #**13** erfolgte nach der in Tabelle 1 angegebenen Basisrezeptur, wobei sämtliche Einsatzstoffe in Gew.-Teilen bezogen auf 100 Gew.-Teile der Monomermischung angegeben sind. Tabelle 1 nennt auch die jeweiligen Polymerisationsbedingungen.

Sämtliche Apparaturen werden vor dem Kontakt mit 1,3-Butadien durch dreimaliges Evakuieren und Spülen mit Stickstoff sauerstofffrei gemacht.

### In Beispiel 1 wurde wie Folgt polymerisiert:

273,7 mg Vam 110 (0,88 mmol entsprechend 0.38 phm) und 61,4 mg DoPAT (0,175 mmol entsprechend 0,086 phm) wurden in 90 ml (139 phm) Monochlorbenzol und 5 ml (6,6 phm) Dimethylacetamid gelöst, 31,7 ml Acrylnitril (481,5 mmol entsprechend 36 phm) zugesetzt und für 10 Minuten mit Stickstoff entgast. Die Monomer-/ Initiatorlösung wurde in den Reaktor überführt, dieser verschlossen und durch dreimaliges Evakuieren / Spülen mit Stickstoff sauerstofffrei gemacht. 70,5 ml 1,3-Butadien (847,2 mmol entsprechend 64 phm) werden über eine Druckbürette zudosiert und die Reaktion durch Erhitzen auf 100 °C gestartet. Der Polymerisationsverlauf wurde durch gravimetrische Umsatzbestimmungen verfolgt. Nach 22 Stunden wurde die Heizquelle entfernt, überschüssiges 1,3-Butadien nach Abkühlen des Reaktors durch Belüften entfernt und das Polymer durch Fällung in ethanolischer Lösung erhalten. Das Polymer wurde anschließend im Hochvakuum getrocknet.

Die Polymerisationen der Beispiele 2 bis 10 wurden analog durchgeführt unter Variation der Menge des Reglers und des Initiators sowie der Art des Lösungsmittels (siehe Tabelle 1). Beispiele 8-11 sowie Beispiel 13 sind Vergleichsbeispiele, bei denen die Polymerisation in einem reinen Lösungsmittel durchgeführt wurde. Soweit die Polymerisationsbedingungen von denen in Beispiel 1 abwichen, ist dies ebenfalls in Tabelle 1 aufgeführt.

**Tabelle 1: Beispiele 1-13**

| | **Rezepturen und Polymerisationsbedingungen** | | | | | | | | | | | | |
|---|---|---|---|---|---|---|---|---|---|---|---|---|---|
| | Alle Angaben zu den Bestandteilen der Polymerisationsrezeptur sind in phm (parts per hundreds of monomer) | | | | | | | | | | | | |
| **Bezeichnung:** | **NBR 1** | **NBR 2** | **NBR 3** | **NBR 4** | **NBR 5** | **NBR 6** | **NBR 7** | **NBR 8** | **NBR 9** | **NBR 10** | **NBR 11** | **NBR 12** | **NBR 13** |
| **Acrylnitril** | 36 | 36 | 36 | 36 | 36 | 36 | 36 | 36 | 36 | 36 | 35 | 35 | 36 |
| **Butadien** | 64 | 64 | 64 | 64 | 64 | 64 | 64 | 64 | 64 | 64 | 65 | 65 | 64 |
| **Monochlorbenzol** | 144 | 139 | 100 | 139 | 139 | 139 | 139 | - | 146 | - | 147 | 140 | - |
| **Dimethylacetamid** | 2,6 | 6,6 | 39,4 | - | - | - | - | - | - | 125 | - | 7 | 122 |
| **Toluol** | - | - | - | 6,1 | - | - | - | - | - | - | - | - | - |
| **1,4-Dioxan** | - | - | - | - | 7,2 | - | - | - | - | - | - | - | - |
| **Acetonitril** | - | - | - | - | | 5,5 | - | - | - | - | - | - | - |
| ***Tert*-Butanol** | - | | - | - | - | - | 5,4 | 103 | - | - | - | - | - |
| **VAm^{®} 110** | 0,38 | 0,38 | 0,38 | 0,38 | 0,38 | 0,38 | 0,38 | 0,38 | 0,38 | 0,38 | 0,38 | 0,39 | 0,39 |
| **DoPAT** | 0,086 | 0,086 | 0,086 | 0,086 | 0,086 | 0,086 | 0,086 | 0,086 | 0,086 | 0,086 | - | - | - |
| **TDM** | - | - | - | - | - | - | - | - | - | - | 0,23 | 0,23 | 0,23 |
| **Reaktionsbedingungen** | | | | | | | | | | | | | |
| **Polymerisationstemperatur (°C)** | 100 | 100 | 100 | 100 | 100 | 100 | 100 | 100 | 100 | 100 | 100 | 100 | 100 |
| **Polymerisationszeit (h)** | 22 | 22 | 22 | 22 | 22 | 22 | 22 | 22 | 22 | 22 | 22 | 22 | 22 |

| | | | | | | | | | | | | | |
|---|---|---|---|---|---|---|---|---|---|---|---|---|---|
| wobei: Vam^{®} 110 : 2,2'-Azobis(N-butyl-2-methylpropionamid) (Wako) | | | | | | | | | | | | | |

**Tabelle 2: Analytische Ergebnisse für die Beispiele 1-13**

| **Analytik:** | **NBR** | **NBR** | **NBR** | **NBR** | **NBR** | **NBR** | **NBR** | **NBR** | **NBR** | **NBR** | **NBR** | **NBR** | **NBR** |
|---|---|---|---|---|---|---|---|---|---|---|---|---|---|
| | **1** | **2** | **3** | **4** | **5** | **6** | **7** | **8** | **9** | **10** | **11** | **12** | **13** |
| **End-Umsatz (%)** | 21,2 | 22,7 | 25,0 | 20,1 | 22,5 | 19,8 | 22,3 | 21,2 | 18,4 | 28,3 | 18,0 | 20,9 | 32,8 |
| **Mn (kg/mol)** | 117 | 98 | 90 | 88 | 89 | 86 | 100 | 79 | 99 | 91 | 86 | 86 | 80 |
| **Mw (kg/mol)** | 240 | 181 | 169 | 165 | 168 | 156 | 197 | 138 | 181 | 175 | 174 | 173 | 168 |
| **PDI** | 2,06 | 1,86 | 1,87 | 1,86 | 1,90 | 1,81 | 1,96 | 1,74 | 1,83 | 1,93 | 2,01 | 2,03 | 2,10 |

| | | | | | | | | | | | | | |
|---|---|---|---|---|---|---|---|---|---|---|---|---|---|
| Mit Mₙ = Gewichtsmittel des Molekulargewichtes M_{w} = Zahlenmittel des Molekulargewichtes PDI = Polydispersitätsindex als Quotient aus M_{w} und Mₙ | | | | | | | | | | | | | |

Den positiven, nicht linearen Einfluß eines Zusatzlösungsmittels auf den Polymerisationsumsatz ohne mögliche Nachteile im Molekulargewicht zu erhalten, kann man deutlich zwischen den Vergleichsbeispiielen 9 und 10, sowie den erfingsgemäßen Beispielen 1 - 3 erkennen. Hier erhält man durch den Zusatz eines zweiten Lösungsmittels einen deutlichen Anstieg des Umsatzes in gleichen Reaktionszeiträumen, ohne dass das Molekulargewicht oder die Polydispersität negativ beeinflusst wird. Diesen positiven überraschenden Effekt kann man unabhängig vom Molekulargewichtsregler beobachten, wie auch der Vergleich zwischen den Besipielen 11 und 13 mit dem erfindungsgemäßen Beispiel 12 zeigt.

## Patentansprüche

1. Verfahren zur Herstellung von Nitrilkautschuken durch radikalische Polymerisation mindestens eines konjugierten Diens, mindestens eines α,β-ungesättigten Nitrils und gegebenenfalls eines oder mehrerer weiterer copolymerisierbarer Monomere, **dadurch gekennzeichnet, dass** mindestens zwei Lösungsmittel eingesetzt werden, wobei ein Lösungsmittel, das sogenannte Hauptlösungsmittel, in einer Menge im Bereich von 70 bis 99,9 Vol%, bezogen auf die Summe aller verwendeten Lösungsmittel eingesetzt wird.

2. Verfahren nach Anspruch 1, **dadurch gekennzeichnet, dass** entweder
(1) in Abwesenheit jeglicher Molekulargewichtsregler, oder
(2) in Anwesenheit einer Verbindung der allgemeinen Strukturformel (VI) 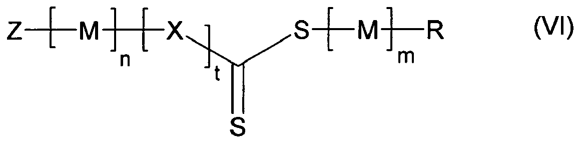 worin
**Z** für H, einen linearen oder verzweigten, gesättigten, ein- oder mehrfach ungesättigten Alkylrest, einen gesättigten, ein- oder mehrfach ungesättigten Carbo- oder Heterocyclylrest, Aryl, Heteroaryl, Arylalkyl, Heteroarylalkyl, Alkoxy, Aryloxy, Heteroaryloxy, Amino, Amido, Hydroxyimino, Carbamoyl, Alkoxycarbonyl, F, Cl, Br, I, Hydroxy, Phosphonato, Phosphinato, Alkylthio, Arylthio, Sulfanyl, Thiocarboxy, Sulfinyl, Sulfono, Sulfino, Sulfeno, Sulfonsäuren, Sulfamoyl, Silyl, Silyloxy, Nitril, Carbonyl, Carboxy, Oxycarbonyl, Oxysulfonyl, Oxo, Thioxo, Borate, Selenate, Epoxy, Cyanate, Thiocyanate, Isocyanate, Thioisocyanate und Isocyanide,
**R**
**(a)** für den Fall, dass m ≠ 0 ist, die gleichen Bedeutungen besitzt wie der Rest Z und
**(b)** für den Fall, dass m = 0 ist, für H, einen linearen oder verzweigten, gesättigten, ein- oder mehrfach ungesättigten Alkylrest, einen gesättigten, ein-oder mehrfach ungesättigten Carbo- oder Heterocyclylrest, Aryl, Heteroaryl, Arylalkyl, Heteroarylalkyl, Alkoxy, Aryloxy, Heteroaryloxy, Amino, Amido, Carbamoyl, Alkoxy, Aryloxy, Alkylthio, Arylthio, Sulfanyl, Thiocarboxy, Sulfinyl, Sulfono, Sulfino, Sulfeno, Sulfonsäuren, Sulfamoyl, Carbonyl, Carboxy,
**M** Oxycarbonyl, Oxysulfonyl, Oxo, Thioxo, Epoxy, Cyanate, Thiocyanate, Isocyanate, Thioisocyanate oder Isocyanide steht, für Wiederholungseinheiten eines oder mehrerer, ein- oder mehrfach ungesättigter Monomeren steht, umfassend konjugierte oder nicht-konjugierte Diene, Alkine und Vinylverbindungen, oder für ein Strukturelement, welches sich ableitet Polymeren umfassend Polyether, insbesondere Polyalkylenglykolether und Polyalkylenoxide, Polysiloxane, Polyole, Polycarbonate, Polyurethane, Polyisocyanate, Polysaccharide, Polyester und Polyamide,
**n und m** gleich oder verschieden sind und jeweils im Bereich von 0 bis 10.000 liegen,
**t** 0 oder 1 ist, sofern n= 0, und gleich 1 ist, sofern n ≠ 0, und
**X** für C(Z₂), N(Z), P(Z), P(=O)(Z), O, S, S(=O) oder S(=O)₂ steht, wobei Z in diesen Resten die gleiche Bedeutungen besitzen kann, wie zuvor für die Formel (VI) ausgeführt, oder
(3) in Anwesenheit einer Verbindung ausgewählt aus der Gruppe bestehend aus
(i) Mercaptanen, die mindestens eine SH-Gruppe enthalten,
(ii) Mercaptoalkoholen, die mindestens eine SH-Gruppe und mindestens eine OH-Gruppe enthalten,
(iii) Mercaptocarbonsäuren, die mindestens eine SH-Gruppe und mindestens eine Carboxylgruppe enthalten, und Mercaptocarbonsäureester, die mindestens eine SH-Gruppe und mindestens eine Carbonsäureestergruppe enthalten,
(iv) Thiocarbonsäuren,
(v) Disulfiden, Polysulfiden,
(vi) Thioharnstoff,
(vii) Allylverbindungen,
(viii) Aldehyden,
(ix) aliphatischen Halogenkohlenwasserstoffen, araliphatischen Halogenkohlenwasserstoffen
(x) Saccharin und
(xi) beliebigen Mischungen von zwei oder mehr der vorgenannten Molekulargewichtsregler (i)-(x).

3. Verfahren nach Anspruch 2, wobei in Schritt a) ein Regler eingesetzt wird ausgewählt aus der Gruppe bestehend aus
(i) Reglern der allgemeinen Formel (VIa), 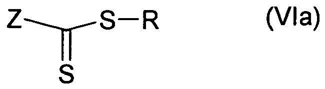 bei denen die Reste Z und R alle in Anspruch 11 genannten Bedeutungen annehmen können,
(ii) Reglern der allgemeinen Formel (VIb) 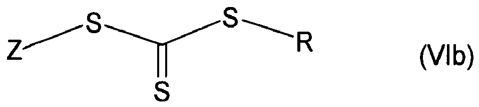 bei denen
Z die zuvor für die allgemeine Formel (VI) in Anspruch 11 genannten Bedeutungen besitzt,
R die zuvor für die allgemeine Formel (VI) in Anspruch 11 für die Variante b) mit m=0 genannten Bedeutungen besitzt, allerdings mit der Einschränkung, dass R nach homolytischer Spaltung der S-R Bindung entweder ein sekundäres, tertiäres oder aromatisch stabilisiertes Radikal ausbildet,
(iii) Reglern der allgemeinen Formel (VIc) 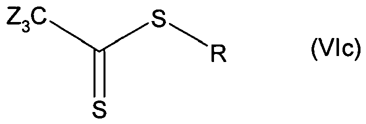 worin
Z die für die allgemeine Formel (VI) in Anspruch 11 genannten Bedeutungen besitzt,
R die für die allgemeine Formel (VI) in Anspruch 11 für die Variante b) mit m=0 genannten Bedeutungen besitzt, allerdings mit der Einschränkung, dass R nach homolytischer Spaltung der S-R Bindung entweder ein sekundäres, tertiäres oder aromatisch stabilisiertes Radikal ausbildet,
(iv) Reglern der allgemeinen Formel (VId) 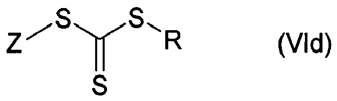 worin
Z die in Anspruch 11 genannten Bedeutungen besitzt, allerdings mit der Einschränkung, dass Z nach homolytischer Spaltung der S-Z Bindung ein primäres Radikal ausbildet, und
R die gleichen Bedeutungen wie Z in Anspruch 11 besitzt, allerdings mit der Einschränkung, dass R nach homolytischer Spaltung der S-R Bindung entweder ein sekundäres, tertiäres oder aromatisch stabilisiertes Radikal ausbildet, und
mit der zusätzlichen Maßgabe, dass Z und R verschiedene Bedeutungen annehmen, und
(v) Reglern der allgemeinen Formel (VIe) 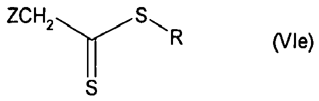 worin
Z alle in Anspruch 11 genannten Bedeutungen besitzen kann und
R die gleichen Bedeutungen wie Z in Anspruch 11 besitzt, allerdings mit der Einschränkung, dass R nach homolytischer Spaltung der S-R Bindung entweder ein sekundäres, tertiäres oder aromatisch stabilisiertes Radikal ausbildet.

4. Verfahren nach Anspruch 3, wobei als Regler in Schritt a) Dodecylpropansäuretrithiocarbonat (DoPAT), Dibenzoyltrithiocarbonat (DiBenT), Cumylphenyldithioacetat (CPDA), Cumyldithiobenzoat, Phenylethyldithiobenzoat, Cyanoisopropyldithiobenzoat (CPDB), 2-Cyanopropyldodecyltrithiocarbonat, 2-Cyanoethyldithiobenzoat, 2-Cyanoprop-2-yl-dithiophenylacetat, 2-Cyanoprop-2-yl-dithiobenzoat, S-Thiobenzoyl-1H,1H,2-Keto-3-oxa-4H,4H,5H,5H-perfluoroundecanthiol oder S-Thiobenzoyl-1-phenyl-2-keto-3-oxa-4H,4H, 5H,5H-perfluoroundecanthiol eingesetzt wird.

5. Verfahren nach Anspruch 2, wobei der Molekulargewichtsregler ausgewählt ist aus der Gruppe bestehend aus
(i) Alkylmercaptanen, bevorzugt C₁-C₁₆ Alkylmercaptanen, insbesondere Methylmercaptan, Ethylmercaptan, n-Butylmercaptan, n-Hexylmercaptan, n-Octylmercaptan, n-Dodecylmercaptan und tert.-Dodecyl-mercaptanen,
(ii) aliphatischen Mercapatoalkoholen und cycloaliphatischen Mercaptoalkoholen, bevorzugt 2-Mercapto-1-ethanol, 3-Mercapto-1-propanol, 3-Mercaptopropan-1,2-diol, 4-Mercapto-1-butanol und 2-Mercaptocyclohexanol,
(iii) Mercaptoessigsäure, 3-Mercaptopropionsäure, Mercaptobutandisäure, Cystein, N-Acetylcystein und Alkylthioglycolate, insbesondere Ethylhexylthioglycolat,
(iv) Thioessigsäure,
(v) Xanthogendisulfide, bevorzugt Diisopropylxanthogendisulfid,
(vi) Thioharnstoff
(vii) Allylalkohol, Allylchlorid,
(viii) Crotonaldehyd,
(ix) Chloroform, Tetrachlorkohlenstoff, Iodoform, Benzylbromid und
(x) Saccharin.
(xi) beliebigen Mischungen von zwei oder mehr der Molekulargewichtsregler (i)-(x).

6. Verfahren nach einem der Ansprüche 1 bis 5, wobei Schritt a) unter Einsatz eines Azoinitators der folgenden Strukturformeln (Ini-1) bis (Ini-6) durchgeführt wird.

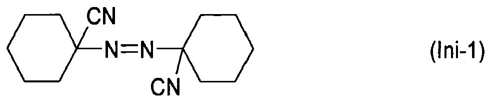

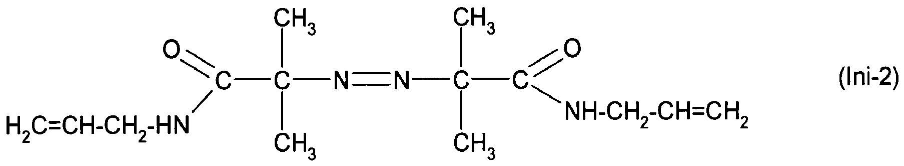

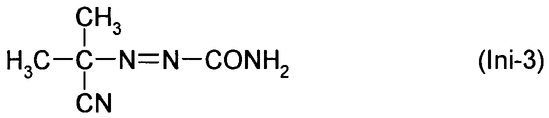

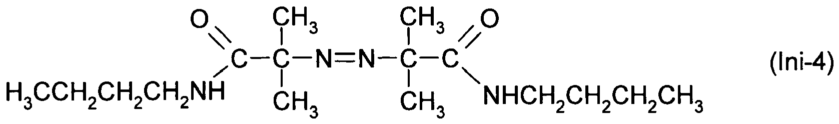

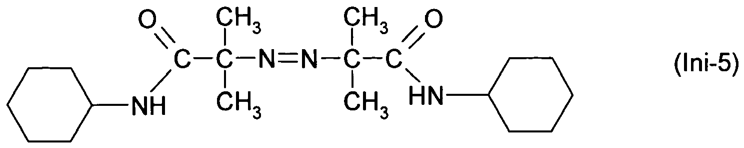

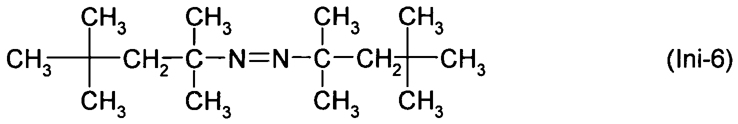

7. Verfahren nach einem der Ansprüche 1 bis 6, **dadurch gekennzeichnet, dass** das Hauptlösungsmittel in einer Menge im Bereich von 75 bis 99,9 Vol%, besonders bevorzugt von 85 bis 99,5 Vol%, bezogen auf die Summe aller eingesetzten Lösungsmittel eingesetzt und das weitere bzw. die weiteren Lösungsmittel zusammen in einer Menge von 0,1 bis 25 Vol%, besonders bevorzugt von 0,5 bis 15 Vol% eingesetzt, wiederum bezogen auf die Summe aller eingesetzten Lösungsmittel.

8. Verfahren nach einem der Ansprüche 1 bis 7, **dadurch gekennzeichnet, dass** als Hauptlösungsmittel solche eingesetzt werden, die einen Hildebrand'schen Lösungsparameter δ (δ = ((ΔHᵥ-RT)/Vₘ)^{½} [(MPa)^{½}]) (Vₘ = molares Volumen; ΔHᵥ = Verdampfungsenthalpie; R = ideale Gaskonstante)) in einem Bereich von 15,5 bis 26 (MPa)^{½} besitzen, bevorzugt in einem Bereich von 16 bis 25 (MPa)^{½}.

9. Verfahren nach einem der Ansprüche 1 bis 8, **dadurch gekennzeichnet, dass** als Hauptlösungsmittel ein Lösungsmittel eingesetzt wird ausgewählt aus der Gruppe bestehend aus Dimethylacetamid, Monochlorbenzol, Toluol, Ethylacetat, 1,4-Dioxan, Acetonitril, tert.-Butanol, tert.-Butylnitril, Dimethylcarbonat, Methylacetat, Isobutyronitril und Aceton und ein oder mehrere weitere Lösungsmittel, die verschieden sind vom Hauptlösungsmittel, ausgewählt sind aus der Gruppe bestehend aus Wasser, Di-isopropylether, Di-n-propylether, Diethylcarbonat, Isopropylmethylketon, Butylacetat, Octansäure, Isopropylacetat, Propylacetat, Pivalonitril, Toluol, Methyl-tert-butylether, 1-Butanol, 2-Ethoxyethanol, Phenoxyethanol, 2-Propanol, Benzylalkohol, 1-Propanol, 2-Methoxymethanol, N,N-Dimethylformamid, Ethanol, 1,3-Butandiol, Diethylenglycol und Methanol.

10. Verfahren nach einem der Ansprüche 1 bis 8 , **dadurch gekennzeichnet, dass** als Hauptlösungsmittel ein Lösungsmittel eingesetzt wird ausgewählt aus der Gruppe bestehend aus tert.-Butanol, 1,4-Dioxan, Acetonitril, Toulol, Isobutyronitril, Isopropylmethylketon, N,N-Dimethylacetamid, Dimethylcarbonat, Trimethylacteonitril, Methylacetat und ein Zusatzlösungsmittel ausgewählt aus der Gruppe ungleich des Hauptlösungsmittels bestehend aus Wasser, Di-isopropylether, Di-n-propylether, Diethylcarbonat, Isopropylmethylketon, Butylacetat, Octansäure, Isopropylacetat, Propylacetat, Pivalonitril, Toluol, Methyl-tert-butylether, 1-Butanol, 2-Ethoxyethanol, Phenoxyethanol, 2-Propanol, Benzylalkohol, 1-Propanol, 2-Methoxymethanol, N,N-Dimethylformamid, Ethanol, 1,3-Butandiol, Diethylenglycol, Methanol, Isobutyronitril, Dimethylcarbonat, Trimethylacteonitril und Methylacetat.

11. Verfahren nach einem der Ansprüche 1 bis 10, **dadurch gekennzeichnet, dass** sich an die radikalische Polymerisation eine Hydrierung anschließt.

12. Verfahren zur Herstellung von Vulkanisaten, **dadurch gekennzeichnet, dass** der optional hydrierte Nitrilkautschuk im Anschluss an das Verfahren seiner Herstellung gemäß einem der Ansprüche 1 bis 11 einer Vernetzung unterzogen wird, bevorzugt durch Zusatz mindestens eines Vernetzers oder durch photochemische Aktivierung, besonders bevorzugt unter Zugabe von einem oder mehreren weiteren Additiven.
